(19) Europäisches Patentamt
European Patent Office
Office européen des brevets

(11) **EP 2 060 849 B1**

(12) **FASCICULE DE BREVET EUROPEEN**

(45) Date de publication et mention
de la délivrance du brevet:
**09.09.2015 Bulletin 2015/37**

(51) Int Cl.:
*F21V 5/04* *(2006.01)*  *F21V 7/00* *(2006.01)*
*F21V 7/04* *(2006.01)*  *F21V 13/00* *(2006.01)*
*H01L 33/00* *(2010.01)*  *F21Y 101/02* *(2006.01)*

(21) Numéro de dépôt: **08291051.4**

(22) Date de dépôt: **10.11.2008**

(54) **Dispositif d'éclairage à sources lumineuses ponctuelles**

Beleuchtungsvorrichtung mit punktartigen Lichtquellen

Lighting device with isolated light sources

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **13.11.2007 FR 0707971**

(43) Date de publication de la demande:
**20.05.2009 Bulletin 2009/21**

(73) Titulaire: **Société de Force et Lumière Electriques
93150 Le Blanc-Mesnil (FR)**

(72) Inventeurs:
• **Grave, Jean-Michel
  59249 Fromelles (FR)**
• **Sevin, Gilles
  62217 Achicourt (FR)**

(74) Mandataire: **Plaçais, Jean Yves
  Cabinet Netter
  36, avenue Hoche
  75008 Paris (FR)**

(56) Documents cités:
**EP-A- 1 519 104       EP-A- 1 850 166
EP-A1- 1 648 037       WO-A-2006/119735
JP-A- 2003 179 265     US-A- 2 254 961
US-A1- 2007 058 138**

EP 2 060 849 B1

# EP 2 060 849 B1

**Description**

L'invention a trait aux dispositifs d'éclairage.

Aux fins d'explication, la présente fait plus particulièrement référence aux dispositifs d'éclairage intérieurs. Cependant, l'invention ne se limite pas à ce domaine d'application particulier.

Il existe de très nombreux types de dispositifs d'éclairage, utilisés pour éclairer une pièce, ou plus généralement un espace intérieur. On connaît, par exemple, les lustres, équipés par exemple d'ampoules classiques ou à basse consommation d'énergie, les lampadaires, par exemple fonctionnant avec des lampes dites "halogènes", les plafonniers, par exemple incorporant des tubes dits "fluorescents", et bien d'autres dispositifs encore.

L'installation d'un tel dispositif dans une pièce peut paraître assez simple.

Pourtant, la réalisation d'un éclairage de bonne qualité répond à des exigences strictes, difficiles à satisfaire.

Une exigence primordiale est d'éviter, ou à défaut de réduire au maximum, l'existence de zones sombres, ou mal éclairées, dans la pièce.

Une exigence supplémentaire est de prévoir une installation lumineuse peu coûteuse, ce qui implique l'utilisation de dispositifs d'éclairage à faible prix d'achat, aisés à installer et à maintenir en état de fonctionnement, mais aussi à faible consommation électrique, afin de limiter les coûts liés à l'approvisionnement énergétique.

D'autres exigences peuvent apparaître, en particulier en fonction des applications. Par exemple, une certaine discrétion du dispositif d'éclairage, ou un caractère esthétique de celui-ci, une commande aisée ou programmable, des variations d'intensité lumineuse peuvent être recherchées ou exigées.

L'importance des exigences croît généralement avec la superficie de la pièce ou de l'espace à éclairer.

Prévoir un éclairage de bonne qualité pour une salle de réunion, un hall de grand magasin ou une salle de classe, par exemple, est bien plus contraignant que d'éclairer un placard chez un particulier. Les lieux de ce type exigent un éclairage de qualité sur l'ensemble de leur superficie. En outre, les coûts de fonctionnement, en particulier les coûts énergétiques, peuvent s'avérer très élevés pour de telles applications.

Un travail difficile doit donc être réalisé afin de déterminer, pour une application particulière, entre autres choses, le type de dispositifs d'éclairage à utiliser, le nombre de dispositifs à prévoir, et leur agencement mutuel.

Le plus souvent, l'exigence de qualité pour l'éclairage est formulée sous la forme d'un éclairement minimum, en général en tous points de la pièce ou de l'espace. Cet éclairement minimum est habituellement défini dans un plan situé à une distance choisie du plafond de la pièce, ou du plancher de celle-ci.

Pour remplir cette exigence, on a l'habitude de procéder de manière essentiellement empirique. On multiplie le nombre de dispositifs d'éclairage jusqu'à atteindre dans les zones les plus délicates d'accès une intensité lumineuse satisfaisante.

Cette façon de procéder présente plusieurs inconvénients. L'éclairage obtenu n'est pas uniforme, car l'intensité lumineuses est supérieure aux endroits où des faisceaux lumineux de dispositifs différents se superposent. En outre, l'intensité lumineuse y est bien supérieure à l'intensité minimale exigée.

Ce procédé conduit à des installations largement surdimensionnées, dans le sens où la somme de l'intensité lumineuse sur l'ensemble de la superficie de la pièce est bien supérieure à la somme de l'intensité minimale requise sur cette superficie. Les coûts, notamment énergétiques et d'installation, sont alors beaucoup plus élevés que nécessaire. Et la multiplication des dispositifs d'éclairage augmente les coûts de maintenance et le risque de panne.

En outre, les dispositifs classiques émettent en général une importante quantité de lumière sur des zones qu'il n'est pas nécessaire d'éclairer. Par exemple, les dispositifs d'éclairage disposés au plafond d'une pièce projettent une grande quantité de lumière sur les murs de cette pièce, ce qui n'a en général pas d'intérêt. En conséquence, les coûts énergétiques s'en trouvent inutilement augmentés.

L'invention a pour but de surmonter ces inconvénients.

Pour ce faire, on prévoit un dispositif d'éclairage comprenant au moins une source lumineuse quasi-ponctuelle et un système de déviation de lumière montés ensemble pour produire une zone d'éclairement, ledit système de déviation de lumière et la source lumineuse étant conjointement agencés de manière à produire dans cette zone d'éclairement une lumière uniforme et homogène dans un plan perpendiculaire à l'axe d'éclairement.

On obtient ainsi un éclairage homogène et uniforme sur l'ensemble de la surface que l'on souhaite éclairer. L'agencement mutuel de plusieurs dispositifs peut être étudié de façon simple puisque chacun de ces dispositifs produit sur la surface éclairée une lumière homogène et uniforme. Il devient également possible de réaliser un flux lumineux moyen d'intensité choisie en agençant mutuellement de manière adéquate plusieurs dispositifs d'éclairage selon l'invention.

D'autres caractéristiques et avantages de l'invention apparaîtront à l'examen de la description détaillée ci-après, et des dessins annexés sur lesquels :

- la figure 1 est une vue schématique en perspective de l'éclairement produit par un dispositif d'éclairage selon l'invention,

- la figure 2 représente une courbe photométrique théorique pour le dispositif de la figure 1,

- la figure 3 représente une courbe photométrique cible pour le dispositif de la figure 1 et une courbe photométrique réelle d'un dispositif d'éclairage classique,

- la figure 4 illustre en détail le dispositif de la figure 1, vu en coupe transversale,

- la figure 5 est une vue en coupe transversale du dispositif de la figure 4 selon un premier mode de réalisation,

- la figure 6 est une vue analogue à la figure 5, montrant en outre le cheminement de rayons lumineux,

- la figure 7 est une vue schématique du dispositif de la figure 4 en situation et montrant le cheminement de la lumière produite,

- la figure 8 est une courbe photométrique résultante pour le dispositif de la figure 4 selon le premier mode de réalisation de l'invention,

- la figure 9 est une courbe photométrique cible pour le dispositif de la figure 4 selon un second mode de réalisation de l'invention,

- les figures 10 et 11 sont analogues aux figures 5 et 6, respectivement pour le dispositif selon le second mode de réalisation de l'invention,

- la figure 12 est analogue à la figure 8 pour le dispositif selon le second mode de réalisation de l'invention,

- les figures 13 et 14 sont des vues en coupe transversale, selon des plans de symétrie distincts, du dispositif de la figure 4 selon un troisième mode de réalisation de l'invention,

- la figure 15 est analogue à la figure 13, le trajet des rayons lumineux y étant en outre indiqué,

- les figures 16 et 17 sont des courbes photométriques résultantes pour le dispositif selon le troisième mode de réalisation de l'invention, respectivement suivant les plans de coupe des figures 13 et 14,

- la figure 18 est une vue schématique en perspective d'un module d'éclairage selon l'invention,

- la figure 19 est une vue de dessous d'une dalle pour le module de la figure 20, selon un premier mode de réalisation,

- la figure 20 est une vue en coupe transversale d'un module d'éclairage selon l'invention,

- la figure 21 est analogue à la figure 19 pour un module selon un second mode de réalisation,

- la figure 22 est une vue de dessous d'une première installation mettant en oeuvre des modules d'éclairage selon l'invention,

- la figure 23 est un diagramme d'éclairement produit dans l'installation de la figure 22 dans un plan d'éclairement.

- la figure 24 est une vue analogue à la figure 22 pour une seconde installation,

- la figure 25 est une vue analogue à la figure 23 pour la seconde installation,

- la figure 26 est une courbe photométrique résultante pour le module de la figure 20,

- la figure 27 est une vue de dessous d'un module d'éclairage selon un troisième mode de réalisation de l'invention,

- la figure 28 représente le spectre émis par le module d'éclairage de la figure 27,

- les figures 29 et 30 sont des vues en perspective de guides de lumière respectivement pour les dispositifs des second et troisième modes de réalisation, et

- les figures 31 et 32 sont des vues en perspective d'un support pouvant être utilisé dans un dispositif selon l'invention.

Les dessins annexés pourront non seulement servir à compléter l'invention, mais aussi contribuer à sa définition, le cas échéant.

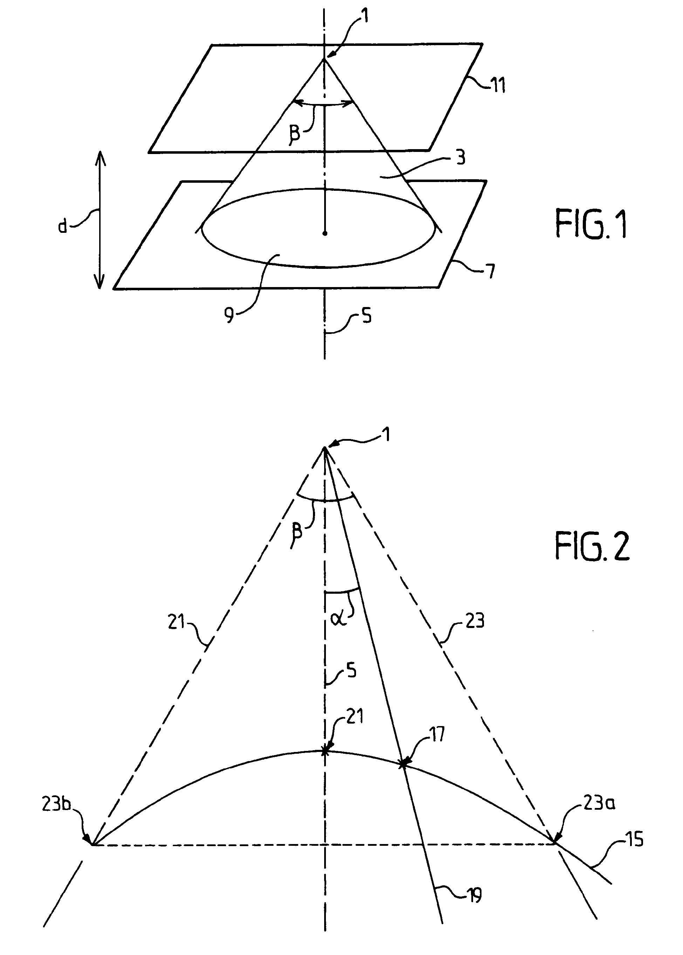

Il est fait référence à la figure 1, laquelle représente schématiquement un dispositif d'éclairage 1.

Le dispositif d'éclairage 1 est agencé de manière à émettre de la lumière dans une zone d'éclairement 3.

Cette zone d'éclairement 3 présente ici une allure de cône de révolution, présentant un axe central 5 et un sommet constitué par le dispositif d'éclairage 1.

Le dispositif d'éclairage 1 produit dans un plan illuminé 7, disposé perpendiculairement à l'axe central 5, et à une distance donnée d du dispositif d'éclairage 1, une surface éclairée 9. Cette surface éclairée 9 présente ici une allure circulaire.

Un plan de référence 11 est défini, lequel s'étend parallèlement au plan illuminé 7, et contient le dispositif d'éclairage 1.

Le cône formant la zone d'éclairement 3 présente un angle au sommet bêta, choisi, en particulier en fonction de la superficie souhaitée pour la surface éclairée 9.

Le dispositif d'éclairage 1 est agencé de manière à produire une lumière uniforme et homogène sur la surface éclairée 9.

Par lumière uniforme et homogène, on entend ici une lumière dont la valeur de l'éclairement, par exemple mesurée en lux, est constante, ou presque constante, sur l'ensemble des points de la surface illuminée 9.

La figure 2 représente une distribution photométrique théorique 15 pour le dispositif d'éclairage 1.

La distribution photométrique théorique 15 représente l'intensité lumineuse, ou puissance d'éclairement, du dispositif d'éclairage 15 selon les différentes directions de l'espace, chaque direction étant repérée par la valeur d'un angle alpha par rapport à l'axe central 5 du cône formant la zone d'éclairement 3. Un point quelconque 17 de la distribution photométrique théorique 15 indique donc l'intensité lumineuse produite par le dispositif d'éclairage 1 suivant la direction matérialisée par la droite 19, et repérée par l'angle alpha que cette droite 19 forme avec l'axe central 5 la zone d'éclairement 3.

La distribution photométrique théorique 15 est bornée par deux génératrices 21 et 23 du cône formant la zone d'éclairement 3.

La distribution photométrique 15 présente une valeur d'intensité lumineuse minimale IMIN dans la direction de l'axe central 5 (repère 21 de la figure 2), et une intensité lumineuse maximale IMAX dans chacune des directions des génératrices 21 et 23, en une position angulaire alpha voisine de la moitié de l'angle au sommet bêta du cône de la zone d'éclairement 3 (repères 23a et 23b sur la figure 2).

Le rapport entre l'intensité maximale IMAX et l'intensité minimale IMIN du dispositif 15 est choisi. De préférence, ce rapport est proportionnel à l'inverse d'une fonction trigonométrique de l'angle bêta. La Demanderesse a constaté qu'un rapport idéal se rapproche du cube du cosinus de l'angle bêta divisé par la valeur deux, ou

$$\mathrm{IMAX/IMIN} = 1/\cos^3(\text{bêta}/2)$$

La distribution photométrique théorique 15 du dispositif suit approximativement une fonction proportionnelle à l'inverse du cosinus de l'angle alpha, ledit cosinus étant élevé à la puissance trois.

Autrement dit, la distribution photométrique théorique 15 suit à peu près la fonction suivante :

$$\mathrm{I} = 1/\cos^3(\text{alpha})$$

L'équation ci-dessus est donnée en unité réduite c'est-à-dire rapportée à l'intensité minimale IMIN.

Il a été constaté qu'une telle distribution photométrique permet d'obtenir une lumière uniforme et homogène sur la surface éclairée 9.

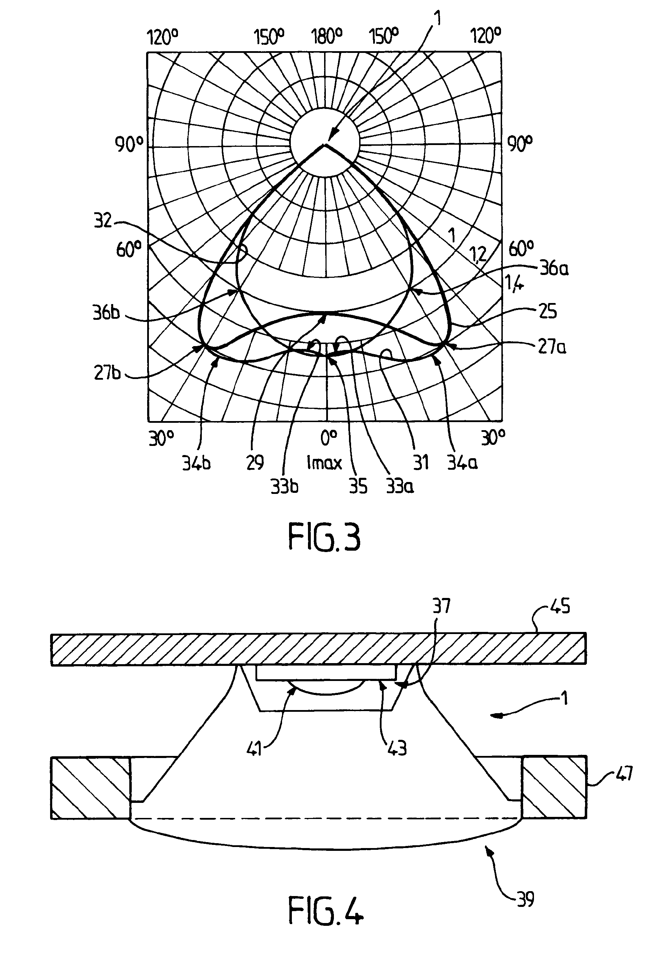

Sur la figure 3, est représentée en trait épais, une distribution photométrique cible 25 pour le dispositif d'éclairage 1, selon un premier mode de réalisation de l'invention.

Dans ce mode de réalisation, l'angle au sommet bêta est choisi voisin de 60°.

La distribution photométrique cible 25 admet une intensité maximale IMAX, en unité réduite, de 1,4, pour deux points extrêmes 27a et 27b disposés dans une position angulaire voisine de 30°. La distribution photométrique 25 admet également une valeur d'intensité minimale IMIN, valant 1 en unité réduite, en un point central 29, disposé sur l'axe central 5, c'est-à-dire pour une valeur d'angle alpha nulle.

La distribution photométrique 25 est lissée par rapport à la distribution photométrique théorique 15 de la figure 2. Par exemple, le segment de la distribution photométrique cible 25 reliant le point extrême 27b au dispositif d'éclairage 1 présente une allure bombée par rapport à la demi-droite correspondant à un angle alpha de 30°. En outre, la distribution photométrique cible 25 présente des arrondis au voisinage des points extrêmes 27a et 27b, tandis que la distribution photométrique théorique 15 présente des arrêtes vives.

Aux fins de comparaison, la figure 3 représente également une première distribution photométrique réelle 31 et une seconde distribution photométrique réelle 32, conformes aux éclairages classiques. Les première 31 et seconde 32 distributions photométriques correspondent respectivement à des plans de symétrie différents. Les dispositifs classiques présentent en général un plan de symétrie principal et un plan de symétrie secondaire selon lesquels les distributions photométriques diffèrent sensiblement. Ces différences empêchent en particulier l'obtention d'un éclairage uniforme et homogène sur une surface d'éclairement circulaire.

La première distribution photométrique 31 et la seconde distribution photométrique 32 de la figure 3 correspondent à un luminaire de type TBS 160418, commercialisé par la Société Philips, et d'un angle au sommet bêta de 60°.

La première distribution photométrique classique 31, correspondant au plan de symétrie principal du dispositif classique considéré, présente une intensité lumineuse minimale en deux points centraux 33a et 33b, correspondant chacun à une même valeur de l'angle alpha, légèrement supérieure à 0°, et une intensité lumineuse maximale en deux points extrêmes 34a et 34b, correspondant chacun à une même valeur de l'angle alpha, légèrement inférieure à 30°.

Le rapport entre l'intensité maximale, obtenue aux points 34a et 34b, et l'intensité minimale, obtenue aux points 33a et 33b, est voisine de 1,1. Cette valeur ne permet pas l'obtention d'une lumière uniforme et homogène dans la surface éclairée 9.

La seconde distribution photométrique classique 32, correspondant au plan de symétrie secondaire du dispositif classique considéré, présente une allure générale de poire ou de goutte d'eau, avec un axe de symétrie correspondant à l'axe central 5.

Cette seconde distribution photométrique classique 32 présente une intensité lumineuse maximale en un point central 35, correspondant à une valeur de l'angle alpha de 0°, et une intensité lumineuse en deux points extrêmes 36a et 36b, correspondant chacun à une valeur de l'angle alpha de 30°, bien inférieure à ladite intensité maximale. L'intensité lumineuse maximale est à peine supérieure à l'intensité lumineuse minimale de la première distribution photométrique 31.

De la même manière que le dispositif d'éclairage illustré par la figure 3, la plupart des dispositifs d'éclairage classiques présentent une illumination beaucoup trop intense dans la direction de l'axe central 5, en sorte qu'un éclairement uniforme et homogène ne peut être obtenu sur la surface d'éclairement 9.

Les distributions photométriques 31 et 32 montrent qu'un éclairage homogène et uniforme dans un plan perpendiculaire à l'axe d'éclairement ne peut pas être obtenu avec les dispositifs d'éclairage classiques.

La géométrie de ces dispositifs classiques, dans lesquels l'émission de lumière est majoritairement surfacique, ou linéique, rend l'émission de lumière pratiquement homogène dans toutes les directions de l'espace.

La structure du dispositif d'éclairage 1 est détaillée sur la figure 4.

Le dispositif d'éclairage 1 comprend principalement une diode électroluminescente 37 et un guide de lumière 39, aussi appelé optique.

La diode électroluminescente 37 constitue une source de lumière quasi ponctuelle, dont la distribution photométrique propre (non représentée) est modifiée par le guide de lumière 39, de manière à obtenir une distribution voisine de la distribution photométrique cible 25.

L'utilisation d'une source de lumière quasi ponctuelle, c'est-à-dire typiquement de surface de l'ordre de quelques millimètres carrés, ou inférieure, permet de guider assez aisément l'émission de lumière.

Avec des dispositifs à émission lumineuse surfacique, ou linéique, au contraire, modifier l'émission de lumière, c'est-à-dire modifier la distribution photométrique de la source de lumière, implique un contrôle en chaque point de la surface, ou de la ligne, de ces dispositifs, respectivement. Il en résulte des coûts de développement et de fabrication très élevés pour réaliser un guidage de lumière, en sorte que cela n'est, en pratique, jamais mis en oeuvre.

La diode électroluminescente 37 peut être du type des diodes électroluminescentes de référence LXML-PWC1-0090 BIN MVND, commercialisées par la Société Philips.

Les diodes électroluminescentes de ce type présentent les avantages d'un flux lumineux élevé, typiquement de 40 à 90 lumens sous une alimentation de 350 milliampères, une bonne efficacité lumineuse, c'est-à-dire un bon rapport éclairement/consommation électrique (exprimé en lumens/watt), un faible coût d'achat, une durée de vie importante, supérieure à 50 000 heures, un faible encombrement, typiquement 3 mm sur 4,5 mm et sont disponibles en différentes couleurs de lumière.

De plus amples informations sur ce modèle de diode électroluminescent particulier peuvent être obtenues du document "Technical Datasheet DS56 - Luxeon Rebel".

L'invention ne se limite nullement à l'utilisation de ce seul modèle de diode électroluminescente, d'autres modèles pouvant bien sûr être employés.

La diode électroluminescente 37 présente une surface d'émission de lumière 41, généralement hémisphérique, et un dispositif de fixation par soudage propre 43, de type substrat.

La diode électroluminescente 37 est montée sur un support 45, lequel peut, suivant les réalisations, prendre la forme d'une carte électronique, de type circuit imprimé, par exemple.

Un élément de protection et de fixation 47 peut être prévu autour de guide de lumière 39 afin d'éviter que des poussières ou autres éléments gênants atteignent la diode électroluminescente 37, la carte électronique 45 ou le guide de lumière 39, ce qui nuirait aux caractéristiques du guidage de lumière.

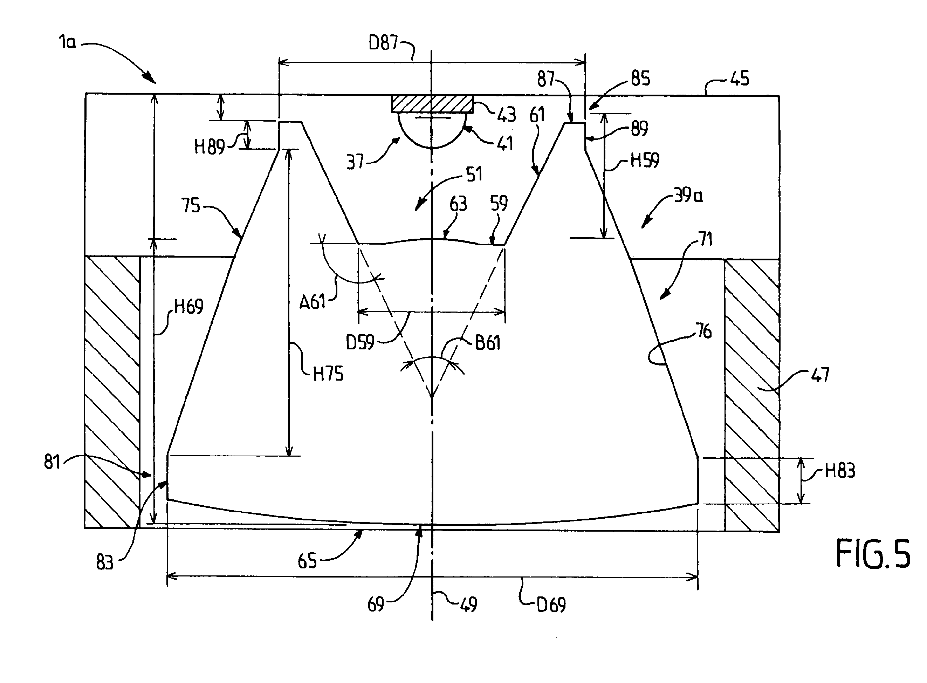

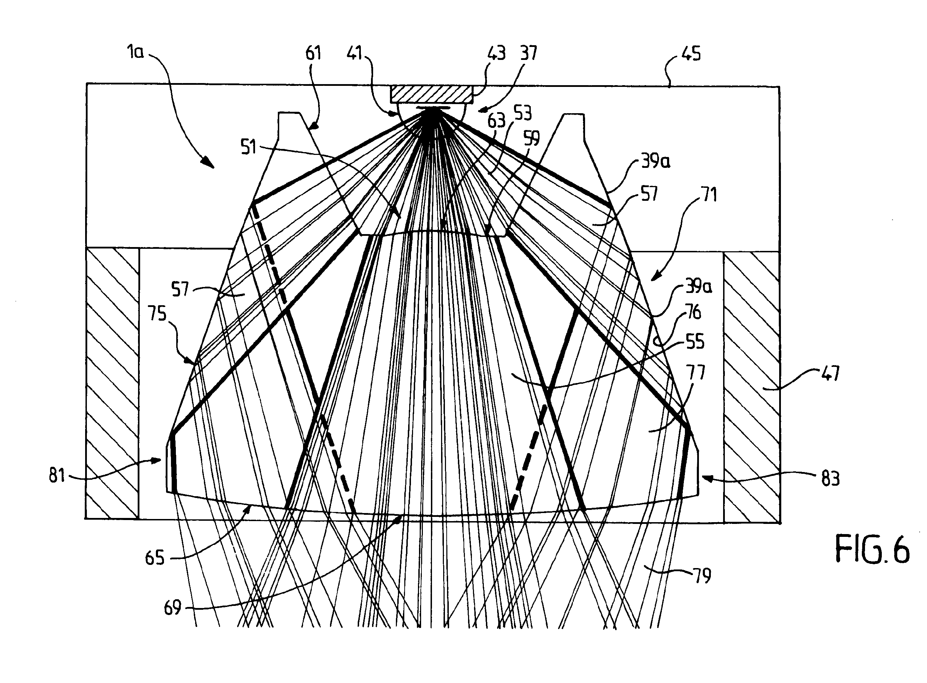

Il est maintenant fait référence aux figures 5 et 6 pour décrire une réalisation du dispositif d'éclairage 1 reproduisant la distribution photométrique cible 25 de la figure 3.

Le dispositif d'éclairage 1a des figures 5 et 6 comprend une diode électroluminescente 37 et un guide de lumière 39a.

Le guide de lumière 39a se présente sous la forme d'une pièce optique unique, présentant une forme de révolution et un axe central 49. La diode électroluminescente 37 est disposée sur cet axe central 49.

Le guide de lumière 39a présente un premier élément optique 51 agencé de manière à collecter la plus grande quantité possible de lumière émise par la diode 37, et de manière à séparer le flux lumineux 53 de la diode 37 en un cône lumineux central 55 et un cône lumineux périphérique 57, entourant le cône lumineux central 55.

Le cône lumineux central 55 s'étend suivant l'axe central 49 du guide lumineux 39a, de manière coaxiale à celui-ci, et de manière divergente avec l'éloignement à la diode 41.

Le cône périphérique 57 présente une section annulaire, entourant le cône lumineux central 55 s'étendant suivant l'axe central 49, et de manière coaxiale à celui-ci. Le cône périphérique 57 diverge en s'éloignant de la diode 37.

Le premier élément optique 51 comprend une face centrale d'entrée 59, ou surface de couplage centrale, disposée en regard de la diode 37, et bordée par une face périphérique 61, ou surface de couplage périphérique.

La face centrale d'entrée 59 est agencée de manière à faire légèrement converger le cône central 55 par rapport au flux lumineux 53 incident.

La face centrale d'entrée 59 présente une allure générale de disque, de diamètre D59, et une portion centrale 63 légèrement bombée en direction de la diode 37 au voisinage de son centre. Cette face centrale d'entrée 59 est réalisée sous la forme d'une conique, qui peut être définie par un rayon de courbure et un coefficient de conicité. Ici, le rayon de courbure est voisin de 9 millimètres, et le coefficient de conicité est voisin de -3 (hyperbole, conformément aux conventions employées dans le domaine de l'optique).

La face centrale d'entrée 59 est disposée à une distance H59 de la diode électroluminescence 37.

La face périphérique 61 borde la face centrale 59, et est inclinée d'un angle A61 par rapport à cette face centrale 59. Cette face périphérique 61 est réalisée sous la forme d'un cône qui peut être caractérisé par son angle au sommet B61. Ici, cet angle au sommet B61 est voisin de 26,565°.

Les caractéristiques de la face centrale 59 sont choisies, en particulier, en fonction des proportions relatives souhaitées entre les cônes central 55 et périphérique 57.

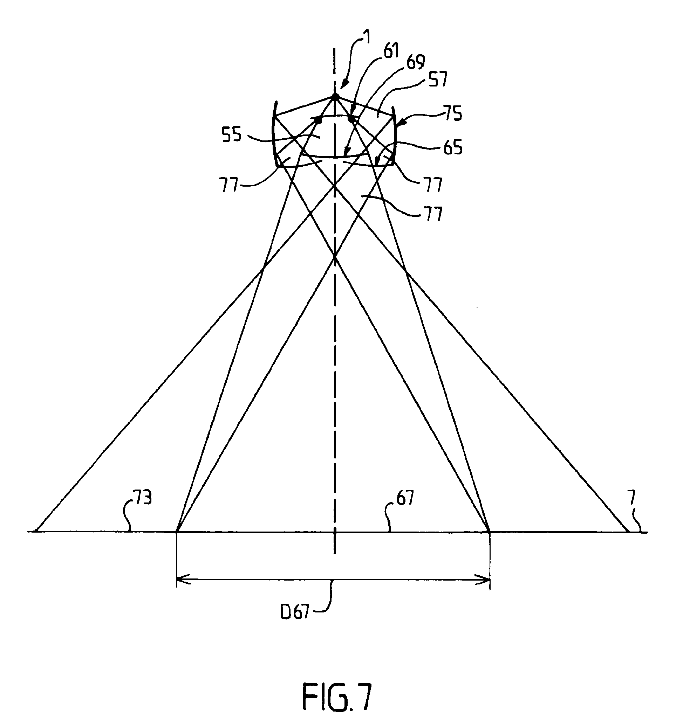

Le guide de lumière 39a comprend en outre un second élément optique 65, disposé sur le trajet du cône lumineux central, et conformé de manière à éclairer une zone centrale 67 de la surface éclairée 9. La zone centrale 67 de la zone éclairée 9 présente ici un contour circulaire, de diamètre D67 déterminé. (Voir figure 7)

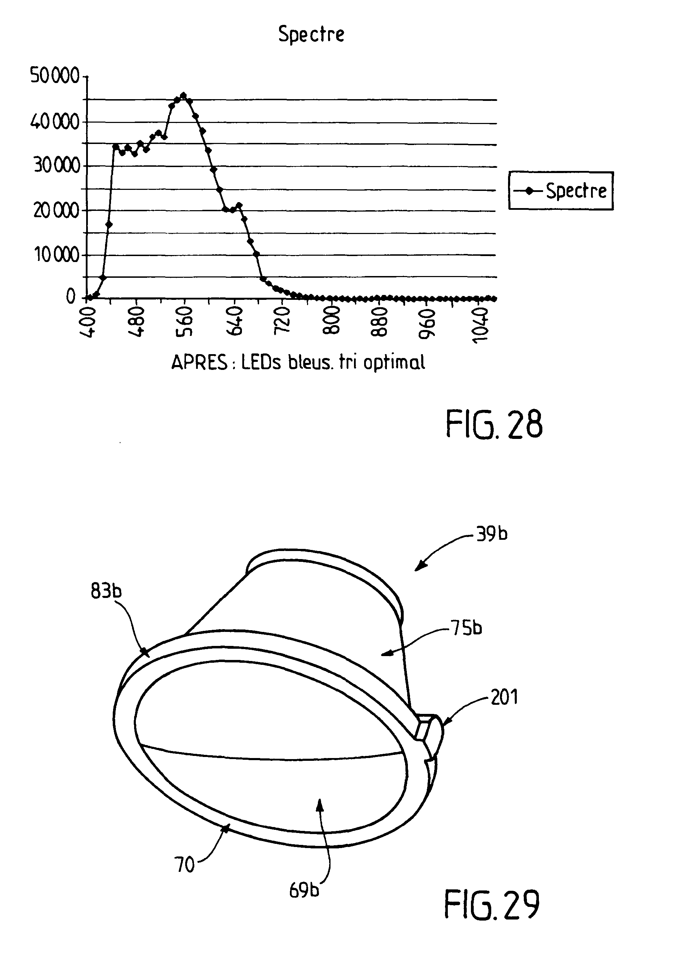

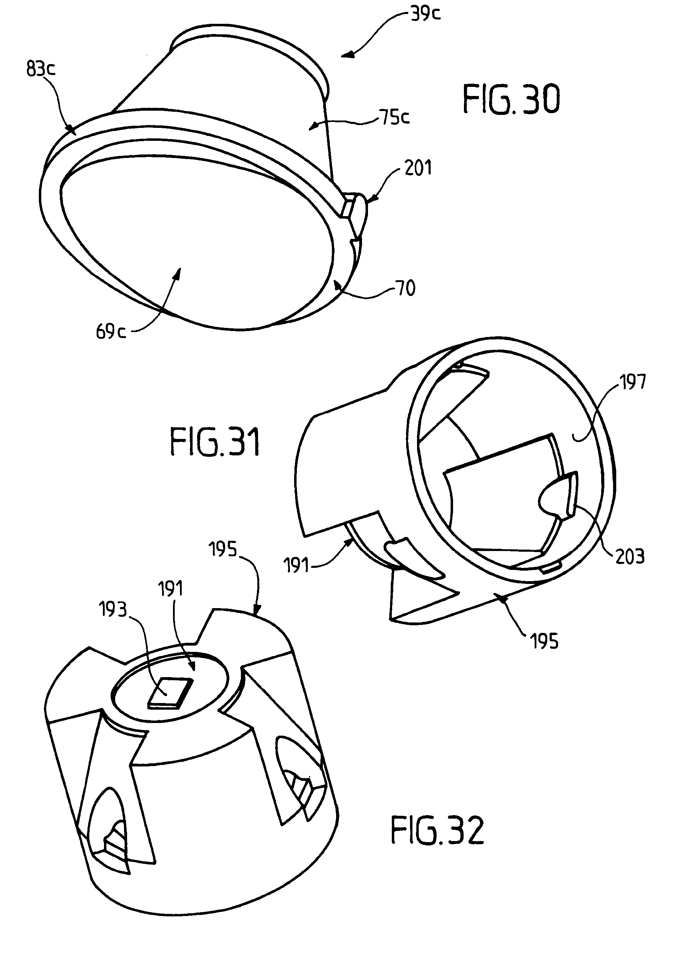

Le second élément optique 65 est réalisé sous la forme d'une face centrale de sortie 69, éloignée de la face centrale d'entrée 59. La face centrale de sortie 69 peut être entourée d'une face périphérique d'appui 70, représentée sur les figures 29 et 30 uniquement, et permettant de maintenir le guide 39a dans le support 47.

La face centrale de sortie 69 présente une allure générale de disque, d'un diamètre D69, et est légèrement bombée en direction de la zone centrale 67.

Les faces centrales d'entrée 59 et de sortie 69 sont distantes, en leur centre, d'une distance H69.

La face centrale de sortie 69 est agencée de manière à faire légèrement diverger le cône central 55 incident.

Le guide de lumière 39a comprend encore un troisième élément optique 71, disposé sur le trajet du cône lumineux périphérique 57, et conformé de manière à éclairer une zone périphérique 73 de la surface éclairée 9, cette zone périphérique 73 étant contiguë à la zone centrale 67, et complémentaire de celle-ci.

La zone périphérique 73 de la surface éclairée 9 présente ainsi une forme de couronne de diamètre intérieur pratiquement égal au diamètre D67 et au diamètre extérieur pratiquement égal au diamètre de la surface éclairée 9. (Voir figure 7)

Le troisième élément optique 71 est réalisé sous la forme d'une face latérale réfléchissante 75. La face latérale réfléchissante 75 présente une allure générale tronconique. La surface latérale réfléchissante 75 est légèrement bombée vers l'extérieur du guide de lumière 39a.

La face latérale réfléchissante 75 est agencée de manière à réaliser l'essentiel de la mise en forme du faisceau lumineux. Cette face latérale réfléchissante 75 est agencée de manière à fonctionner en réflexion totale, ou quasi totale.

La face latérale réfléchissante 75 présente une courbe génératrice 76, laquelle est déterminée de manière que le dispositif la reproduise sensiblement la distribution photométrique cible 25. La forme de cette courbe génératrice 76 est déterminante pour l'obtention d'une distribution photométrique conforme à la distribution photométrique cible 25.

Cette détermination peut être réalisée par tâtonnement ou par essais successifs.

Pour une courbe à tester, il est possible de déterminer la courbe photométrique résultante pour le dispositif 1a en appliquant les règles classiques de l'optique.

De préférence, un logiciel de simulation peut être utilisé pour faciliter les calculs et réduire le temps nécessaire à l'essai d'une courbe particulière.

La courbe génératrice 76 peut être établie en répartissant un certain nombre de points le long de cette courbe et en déterminant une courbe d'interpolation pour lesdits points. La position de ces points peut alors être modifiée ou adaptée de manière successive jusqu'à atteindre le résultat escompté, ou un résultat jugé satisfaisant.

La courbe d'interpolation peut être une courbe B-spline cubique.

Le tableau ci-dessous donne un exemple de définition de la courbe génératrice 76 pour l'optique 1a, sous la forme d'une série de points, dont la courbe génératrice 76 constitue l'interpolation sous la forme d'une B-spline cubique. Chaque point est identifié par son numéro N, sa distance par rapport à l'axe 49, notée "r" et exprimée en millimètres, et sa distance par rapport à l'extrémité de la face latérale 75 la plus proche de la diode 37.

| N | r | Z |
|---|---|---|
| 1 | 5.800 | 0 |
| 2 | 6.259 | 1 |
| 3 | 6.691 | 2 |
| 4 | 7.096 | 3 |
| 5 | 7.473 | 4 |
| 6 | 7.834 | 5 |
| 7 | 8.184 | 6 |
| 8 | 8.524 | 7 |
| 9 | 8.859 | 8 |
| 10 | 9.189 | 9 |
| 11 | 9.526 | 10 |
| 12 | 9.880 | 11 |
| 13 | 10.000 | 11.4 |

La courbe génératrice 76 pourrait, le cas échéant, être définie à l'aide d'un nombre différent de points.

En pratique la surface réfléchissante 75 peut être définie dans l'espace sous la forme d'un fichier IGES, lequel peut exploité par différents logiciels du métier, par exemple par une machine à commande numérique utilisée pour usiner la surface en question.

La face latérale réfléchissante 75 présente une hauteur H75.

La face latérale réfléchissante 75 transforme le cône lumineux périphérique 57 en un cône lumineux réfléchi 77. Le cône lumineux réfléchi 77 est conformé de manière à converger en direction de la face centrale d'extrémité 69.

Cette face d'extrémité 69 transforme le cône lumineux réfléchi 77 en un cône de lumière périphérique sortant, légèrement convergeant par rapport au cône lumineux réfléchi 77 incident.

Ce troisième élément optique 65, respectivement la face centrale de sortie 69, peuvent être traités en léger dépoli, en sorte que l'éblouissement direct de la source est diminué.

La face centrale d'entrée 63 et la face centrale de sortie 69 sont agencées de manière à produire une intensité lumineuse sensiblement constante sur la zone centrale 61 de la surface éclairée 9.

La face latérale 75 et face centrale de sortie 69 sont conformées de manière à produire une intensité lumineuse sensiblement constante sur la zone périphérique 73 de cette surface éclairée 9.

Le second élément optique 51 est conformé de manière que l'intensité lumineuse sur la zone centrale 67 soit sensiblement égale à l'intensité lumineuse sur la zone périphérique 73 de la surface éclairée 9.

Le guide de lumière 39a comprend en outre un élément de jonction 81 entre la face latérale réfléchissante 75 et la face centrale de sortie 69. L'élément de jonction 81 est ici réalisé sous la forme d'une face cylindrique 83, coaxiale à l'axe central 49, et s'étendant dans une direction parallèle à celui-ci. La face cylindrique 83 est ici réalisée en tant que portée cylindrique assurant un positionnement précis du guide 39a par rapport au support 47 dans le dispositif 1a.

La face cylindrique 83 présente une hauteur H83.

Le guide de lumière 39a comprend encore un élément d'embase 85 joignant la face latérale 75 et la face périphérique d'entrée 61.

L'élément d'embase 85 est réalisé ici sous la forme d'une première face 87, en forme de couronne et disposée perpendiculairement à l'axe central 49, bordé d'une seconde face 89 cylindrique disposée de manière coaxiale à l'axe central 49 et s'étendant parallèlement à celui-ci.

La première face 87 présente un diamètre extérieur D87 et la seconde face 89 présente une hauteur H89.

Le tableau ci-dessous donne des valeurs numériques aux différents éléments géométriques du guide de lumière 39a, aux fins d'illustration uniquement.

| H59 | 4,48 mm |
|-----|---------|
| D59 | 5,50 mm |
| A61 | 103,282° |
| B61 | 26,565° |
| H75 | 11, 5 mm |
| H83 | 1, 5 mm |
| D69 | 20 mm |
| H69 | 10,56 mm |
| H89 | 1 mm |
| D87 | 11, 6 mm |

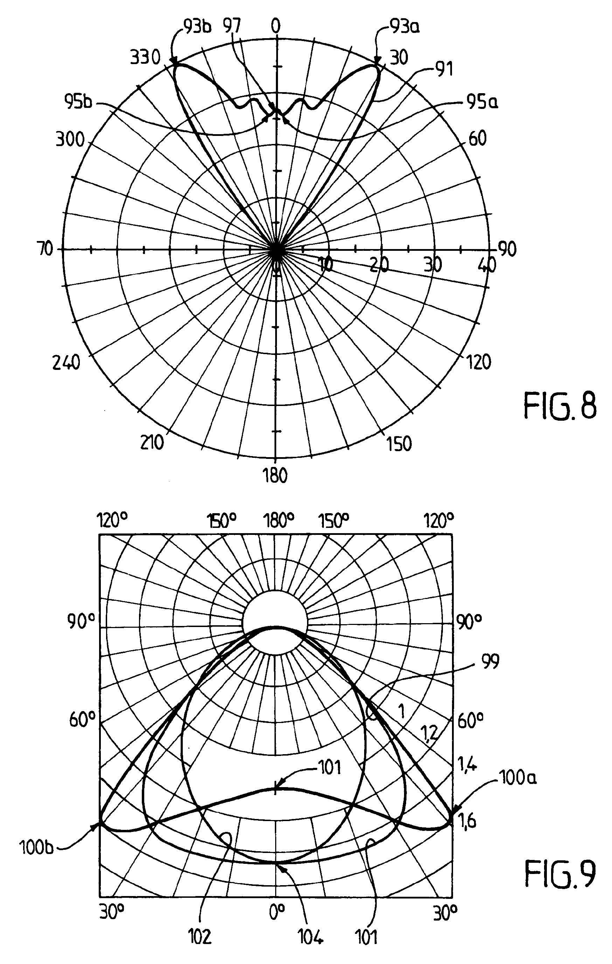

La figure 8 représente une distribution photométrique résultante 91 pour le dispositif 1a illustré sur les figures 5 à 7.

Cette distribution photométrique 91 peut être obtenue par mesure ou bien par simulation numérique à partir d'une définition géométrique du guide de lumière 39a.

Une intensité lumineuse maximale est obtenue au voisinage de points extrêmes 93a et 93b, situés chacun à proximité de valeurs d'angle au sommet de 30°, par valeurs inférieures.

Une valeur d'intensité lumineuse minimale est obtenue en deux points 95a et 95b, situés chacun au voisinage d'un point central 97 et de part et d'autre de celui-ci.

Seul un très faible écart existe entre la valeur d'intensité obtenue au point central 97 et celle obtenue aux points 95a et 95b. Ces valeurs d'intensité sont bien inférieures aux valeurs maximales obtenues aux points 93a et 93b. Le rapport entre ces intensités est voisin de 1,4. Il en résulte une répartition homogène et uniforme de la lumière sur la surface éclairée 9.

Une distribution photométrique cible 99, représentée en trait épais, pour un dispositif d'éclairage 1b selon un second mode de réalisation est représenté sur la figure 9.

L'angle bêta du cône formant la zone d'éclairement 3 est choisi à une valeur voisine de 80°.

L'intensité lumineuse maximale IMAX est obtenue en des points d'extrémité 100a et 100b, situés à des angles au sommet voisin de 40°.

L'intensité minimale IMIN est obtenue pour un point central 101 disposé suivant l'axe central 5 de la zone d'éclairement 3.

Une première distribution photométrique 102, suivant un premier plan de symétrie, et une seconde distribution photométrique 103, suivant un plan de symétrie secondaire, pour un dispositif classique sont également représentées. Ce dispositif classique est analogue au précédent, et s'en distingue principalement par son angle au sommet de sensiblement 80°.

Les première 101 et seconde 102 distributions photométriques présentent un maximum d'intensité lumineuse dans l'axe 15 du dispositif classique (voir repère 104) en sorte qu'une répartition homogène et uniforme de la lumière ne peut être obtenue avec un tel dispositif, car une lumière trop intense est émise dans l'axe 15.

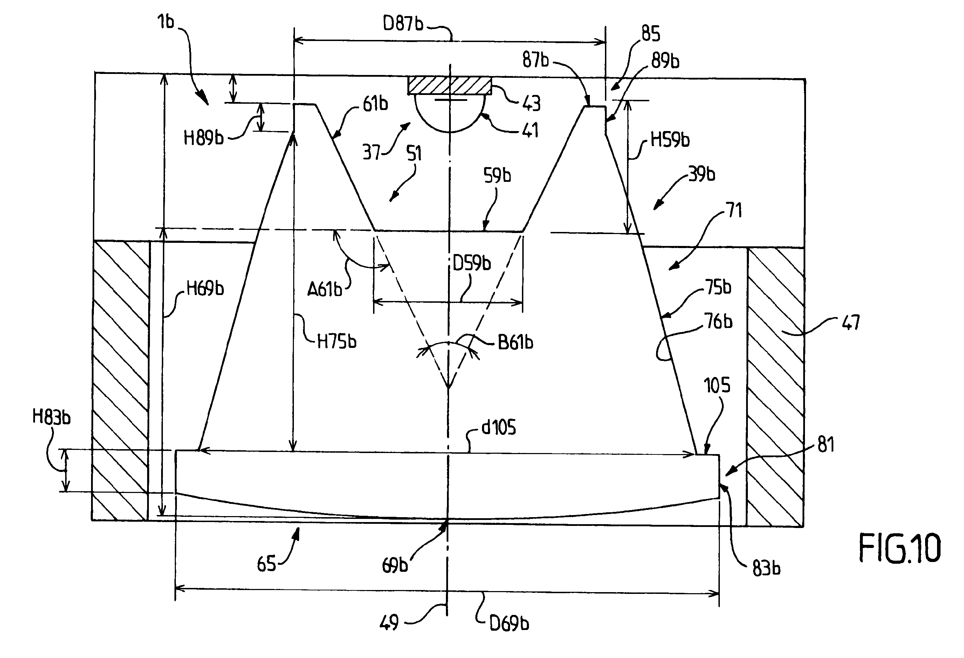

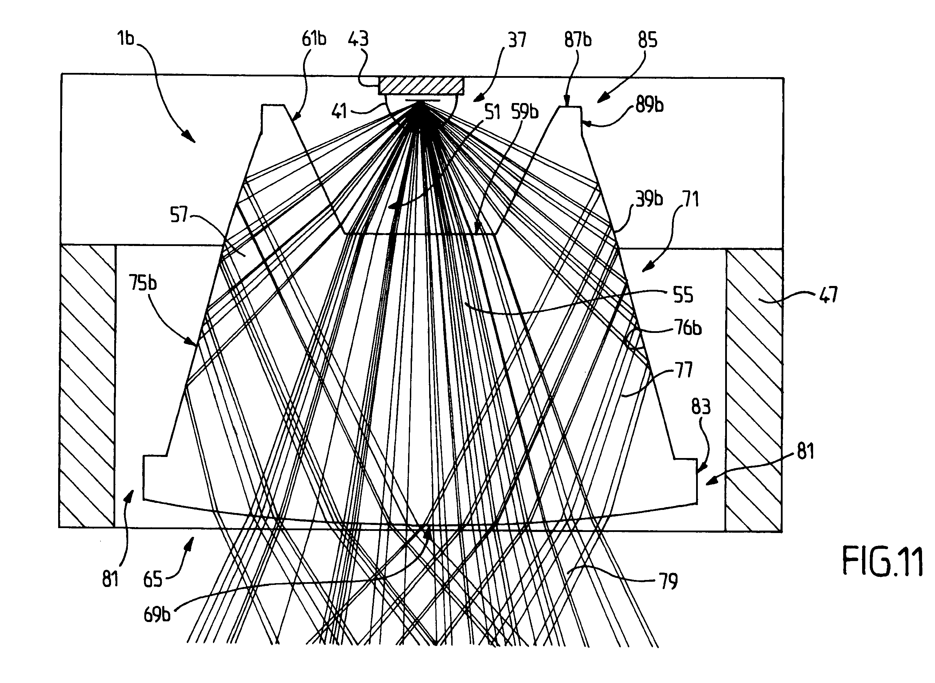

Les figures 10 et 11 illustrent la réalisation du dispositif d'éclairage 1b destiné à reproduire la distribution photométrique cible 99 de la figure 9.

Sur ces figures 10 et 11, les éléments fonctionnels analogues aux éléments des figures 5 et 6 portent des références identiques auxquelles le suffixe "b" a été adjoint.

Outre les dimensions géométriques, le guide de lumière 39b des figures 10 et 11 diffère du guide de lumière 39a des figures 5 et 6 par la courbe génératrice 76b de la surface latérale 75b, laquelle a été adaptée de manière à correspondre à la distribution photométrique cible 99. Cette adaptation peut être vue comme un moyen d'obtenir un éclairage uniforme et homogène sur une surface d'éclairement 9 de plus grande étendue que le mode de réalisation précédent.

Le tableau ci-dessous donne un exemple de définition de cette courbe génératrice, avec les mêmes conventions que précédemment.

| N | r | Z |
|---|---|---|
| 1 | 5.800 | 0 |
| 2 | 6.186 | 1 |
| 3 | 6.536 | 2 |
| 4 | 6.858 | 3 |
| 5 | 7.158 | 4 |
| 6 | 7.441 | 5 |
| 7 | 7.711 | 6 |
| 8 | 7.980 | 7 |
| 9 | 8.246 | 8 |
| 10 | 8.515 | 9 |
| 11 | 8.790 | 10 |
| 12 | 9.050 | 11 |
| 13 | 9.150 | 11.4 |

L'élément de jonction 81 comprend une face cylindrique 83b, agencée de manière à positionner de manière précise le guide de lumière 39b par rapport au dispositif 1b. L'élément de jonction 81 comprend une face en couronne 105, disposée perpendiculairement à l'axe central 49, et joignant la face latérale réfléchissante 75b à la face cylindrique 83b. La face en couronne 105 présente un diamètre intérieur D105.

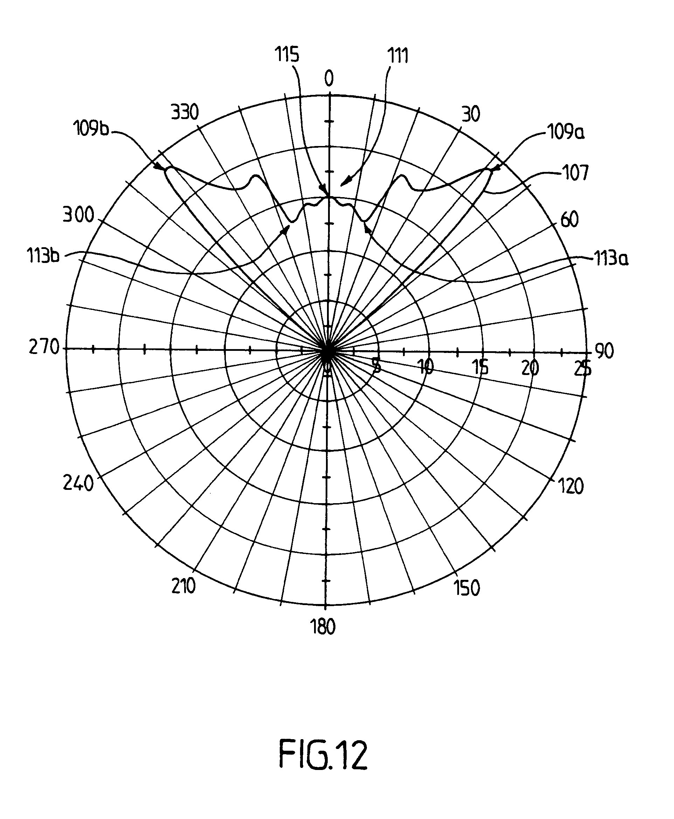

La figure 12 montre la distribution photométrique résultante 107 du dispositif d'éclairage 1b des figures 10 et 11.

L'intensité lumineuse maximale IMAX est obtenue en des points extrêmes 109a et 109b situés en des positions angulaires voisines de 42°.

La distribution photométrique résultante 107 présente une zone d'inflexion 111 centrée sur l'axe central de la zone d'éclairement 3, dans laquelle l'intensité lumineuse est bien inférieure à l'intensité maximale IMAX.

La zone d'inflexion 111 comprend deux points d'extrémité 113a et 113b, pour lesquels l'intensité lumineuse est minimale. Ces points d'extrémité 113a et 113b sont situés chacun en une position angulaire voisine de 15°.

La zone d'inflexion 111 présente un maximum en un point central 115, disposé sur l'axe central 15 de la zone d'éclairement 3 (angle alpha nul).

La valeur moyenne de l'intensité sur cette zone d'inflexion centrale 111 est telle que le rapport de l'intensité maximale sur cette valeur moyenne est voisine de la valeur de 1,6 illustrée sur la figure 9.

Cette configuration permet l'obtention d'un éclairement uniforme et homogène sur l'ensemble de la surface d'éclairement 9.

Le tableau suivant rassemble des données numériques pour les différents éléments géométriques du guide de lumière 39b.

| | |
|---|---|
| H59b | 4,77 mm |
| D59b | 5,50 mm |
| A61b | 103,282° |
| B61b | 26,565° |
| H75b | 11,50 mm |

(suite)

| H83b | 1,60 mm |
|------|---------|
| D69b | 20 mm |
| H69b | 10,27 mm |
| H89b | 1,00 mm |
| D87b | 11,60 mm |

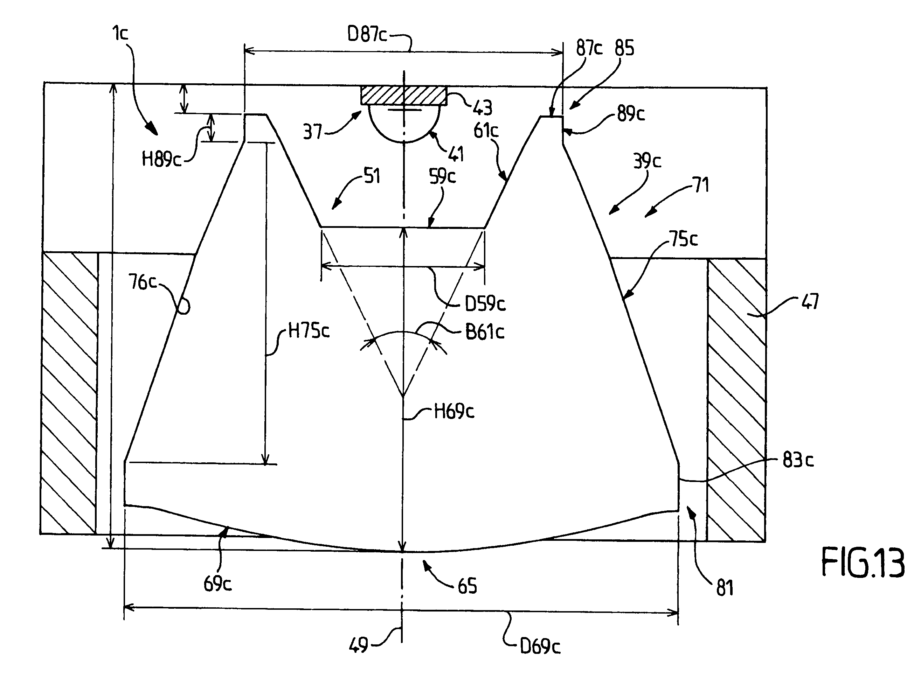

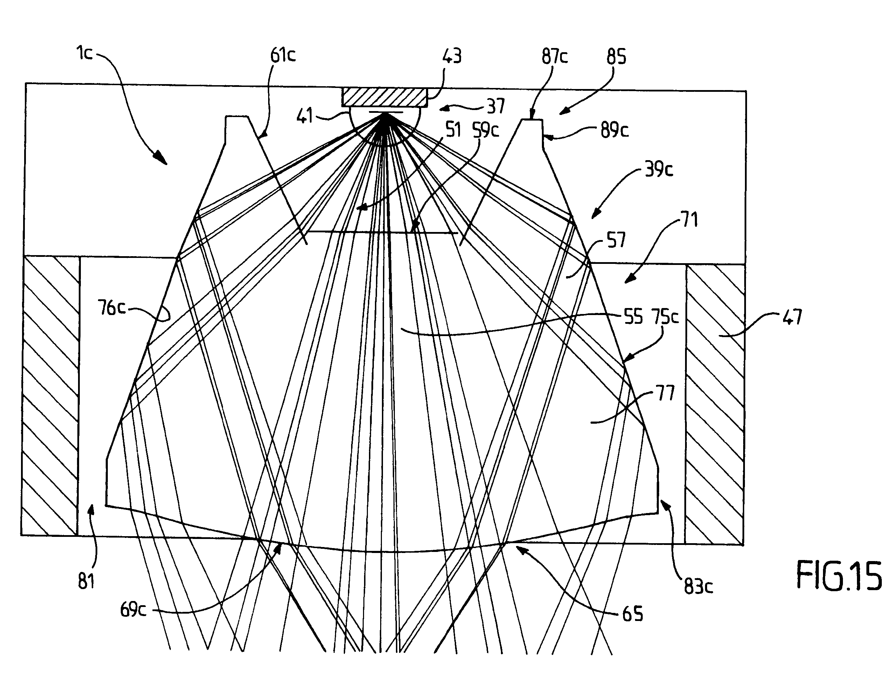

Il est maintenant fait référence aux figures 13, 14 et 15 pour décrire un troisième mode de réalisation de l'invention.

Le dispositif d'éclairage 1c des figures 13 à 15 comprend une diode électroluminescente 37 et un guide de lumière 39c.

Sur ce guide de lumière 39c, les éléments similaires aux éléments des précédents modes de réalisation portent la même référence numérique, à laquelle la lettre "c" est adjointe.

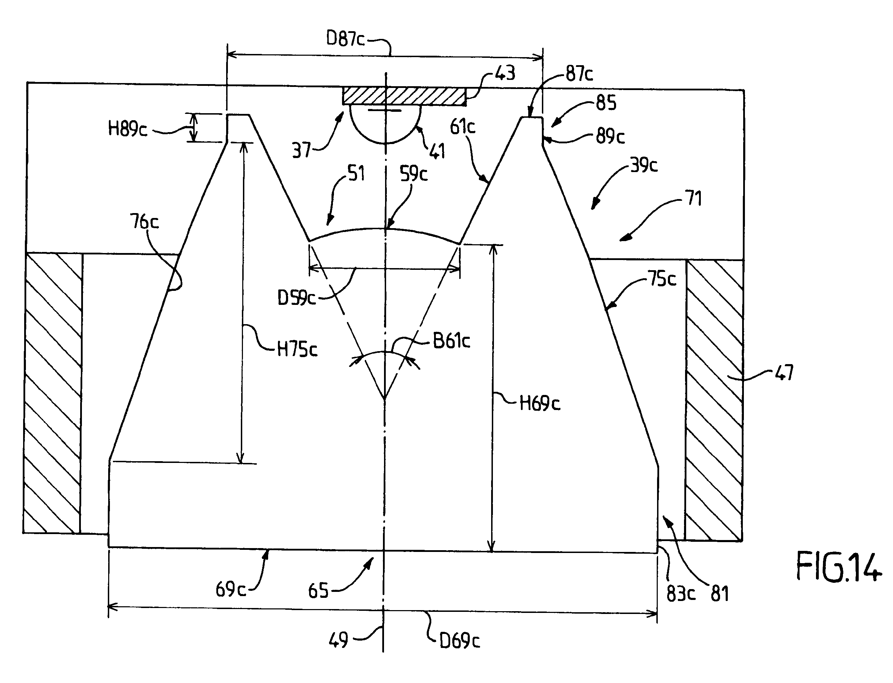

Ici, le guide de lumière 39c ne présente pas une forme de révolution. Le guide de lumière 39c admet deux plans de symétrie, perpendiculaires entre eux. La figure 13 représente une coupe selon l'un de ces plans de symétrie tandis que la figure 14 représente une coupe selon l'autre de ces plans.

Le premier élément optique 51 comprend une surface périphérique 61 bordant une face centrale 59c bombée. La face centrale 59c présente une courbure s'étendant suivant le plan médian de la figure 13, la ligne sommet de cette courbure formant une droite dans ce plan de la figure 13. La face centrale 59c est réalisée ici sous la forme d'une calotte cylindrique.

Le second élément optique 65 présente une face centrale de sortie 69c bombée présentant une courbure s'étendant suivant le plan médian de la figure 14, la ligne sommet de cette courbure formant une droite dans ce plan de la figure 14. La face de sortie 69c est ici réalisée sous la forme d'une calotte cylindrique.

Le troisième élément optique 71 est réalisé sous la forme d'une face latérale réfléchissante 75c, déterminée de manière à réaliser un éclairage uniforme et homogène sur la surface d'éclairement 9.

Ici, la face latérale réfléchissante 75c est réalisée de manière identique à la surface réfléchissante 75.

Pour faciliter le positionnement, un élément détrompeur (non représenté) pourra être prévu.

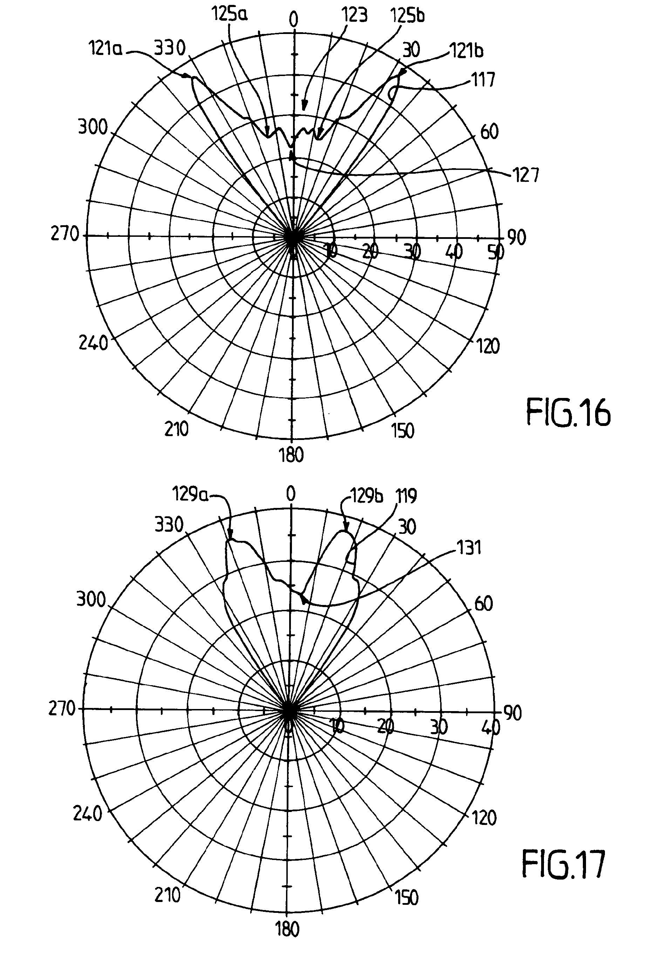

Les figures 16 et 17 illustrent des courbes photométrique résultantes 117 et 119, respectivement suivant le plan médian de la figure 13 et le plan médian de la figure 14.

La courbe photométrique 117 présente une intensité lumineuse maximale IMAX en deux points extrêmes 121a et 121b, situés au voisinage d'un angle alpha de 30°, légèrement au-delà de cet angle. Cette courbe photométrique 117 présente aussi une portion incurvée 123, disposée suivant l'axe central du guide de lumière 39c, et d'intensité moyenne IMOY largement inférieure à l'intensité maximale IMAX. La portion incurvée 123 s'étend entre deux point extrêmes 125a et 125b, situés au voisinage d'un angle alpha de 15°, et présente une valeur minimale IMIN, pour l'ensemble de la courbe photométrique 117, en un point central 127.

La courbe photométrique 119 présente une intensité lumineuse maximale IMAX en deux points extrêmes 129a et 129b, situés au voisinage d'un angle alpha de 20°. Cette courbe photométrique 117 présente une valeur d'intensité lumineuse minimale IMIN en un point 131 voisin de l'axe central.

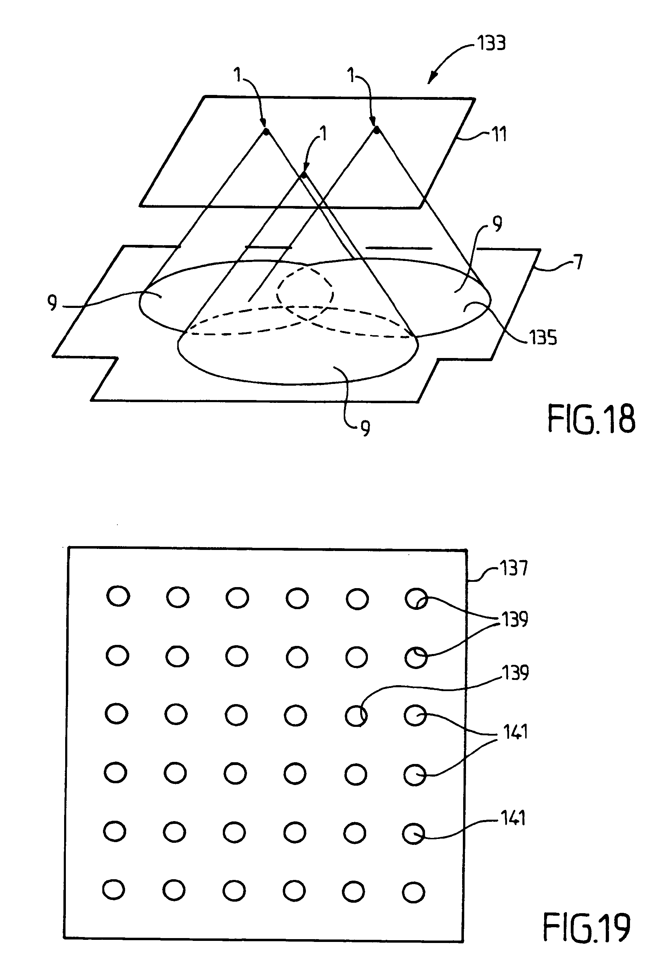

La figure 18 représente schématiquement un module d'éclairage 133, réalisé à partir d'une pluralité de dispositifs d'éclairage 1 disposés dans le même plan de référence 11. Le module d'éclairage 133 de la figure 18 comprend trois dispositifs d'éclairage 1.

Le module d'éclairage 133 produit une surface éclairée 135 résultant de la superposition des surfaces éclairées 9 respectives de chacun des dispositifs d'éclairage 1. Chacun des dispositifs d'éclairage 1 produit une lumière homogène et uniforme sur sa surface éclairée 9 respective. Là où se superposent chacune des surfaces d'éclairement des dispositifs 1, une lumière homogène et uniforme est produite, et le flux lumineux y est sensiblement égal à la somme des flux lumineux de chacun de ces dispositifs 1.

La distance séparant les dispositifs d'éclairage 1 entre eux dans le plan 11 est négligeable en comparaison de la distance séparant l'un de ces dispositifs au plan d'éclairement 7 (par exemple un rapport de 40 à 60 peut être envisagé), en sorte que la superposition des surfaces d'éclairement 9 respectives coïncide en pratique avec la surface éclairée 135. Le module 133 permet d'obtenir un éclairage uniforme et homogène sur cette surface éclairée 135, et dont la valeur correspond à l'addition des puissances d'éclairage individuelles des dispositifs d'éclairage 1.

Le nombre de dispositifs d'éclairage 1 peut être adapté en fonction de l'intensité lumineuse souhaitée sur la surface éclairée 135.

L'angle au sommet bêta peut être choisi petit pour concentrer la lumière sur une zone limitée.

La figure 19 illustre une dalle 137 en tant qu'exemple de module d'éclairage 133.

La dalle 137 présente une pluralité d'orifice de passage 139, chacun de ces orifices de passage 139 étant agencé de manière à permettre le passage d'un guide de lumière 141, du type précédemment décrit. Les orifices de passages 139 sont ici répartis en tableau.

Des répartitions différentes peuvent être envisagées sans modifier de façon importante la luminosité sur la surface éclairée 139.

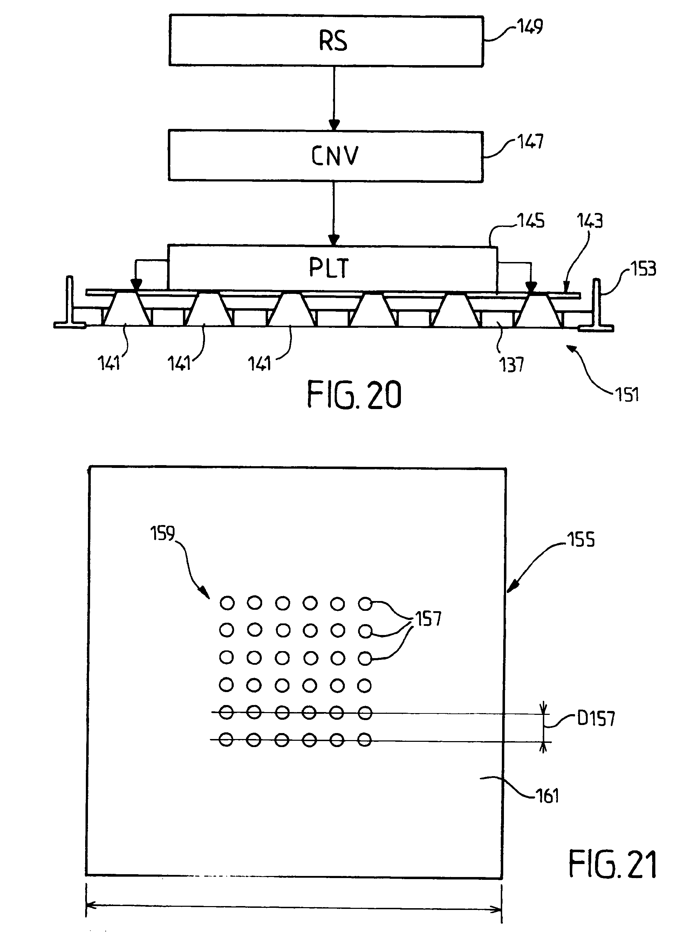

Sur la figure 20, une pluralité de dispositifs d'éclairage 141 est montée sur une plaque support 143. Ici, la plaque support 143 est réalisé sous la forme d'une carte électronique recevant en outre un système de commande PLT 145 pour les diodes électroluminescentes des dispositifs d'éclairage 141. Cet ensemble est relié à un convertisseur de courant CNV 147 destiné à abaisser la tension d'un courant électrique disponible sur un réseau RS 149. L'ensemble formé de la plaque support 143, des dispositifs d'éclairage 141 et de la dalle 137 forme un module d'éclairage 151. Ce module d'éclairage 151 peut être installé sur des supports profilés 153, par exemple suspendus à la manière de dalles de faux plafond.

La figure 21 montre un module d'éclairage 155 dans lequel les dispositifs d'éclairage 157 sont répartis dans une zone centrale 159 d'une dalle 161.

Ici, ces dispositifs sont répartis en tableau, chaque dispositif étant séparé d'un dispositif voisin d'une distance D157 choisie, par exemple 40 millimètres.

Le motif formé par les dispositifs d'éclairage 157 pourrait également être positionné en tout lieu situé au voisinage de la périphérie de la dalle 161, dans des applications particulières notamment.

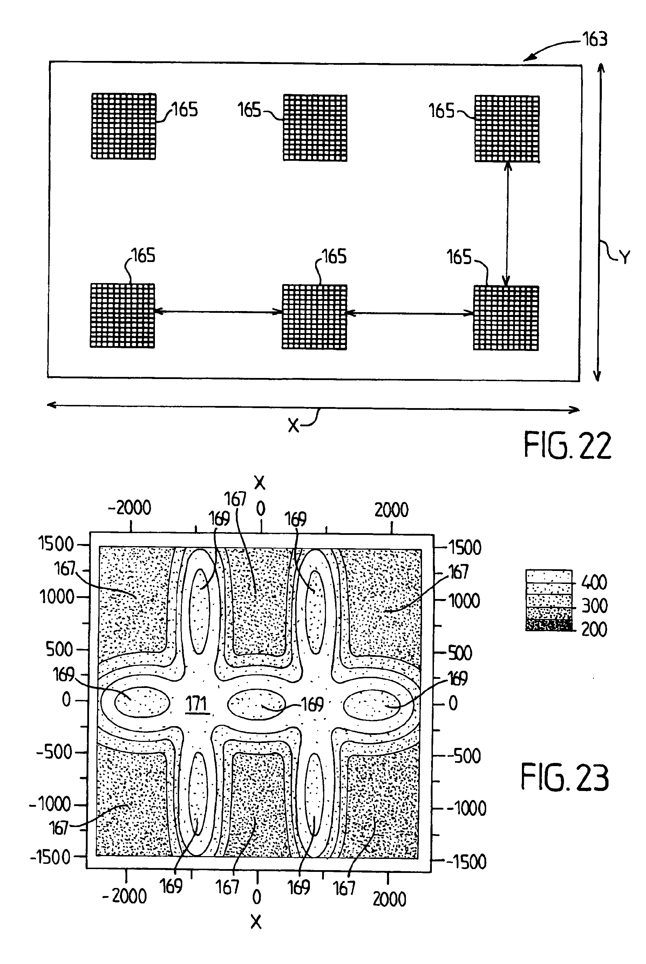

La figure 22 représente une installation d'éclairage 163 comprenant une pluralité de modules d'éclairage 165, équipés de dispositifs d'éclairage de type 1a. Les modules d'éclairage 165 sont répartis au plafond d'une pièce rectangulaire, ici de 3 mètres de large (axe Y) sur 5 mètres de longueur (axe X).

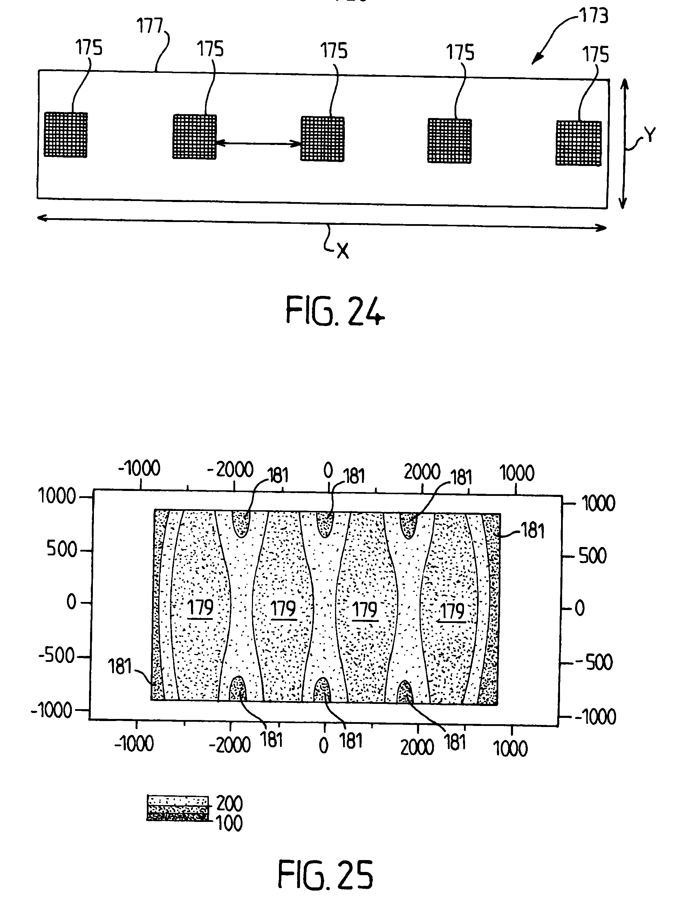

La figure 23 représente les différents niveaux d'éclairement dans ladite pièce, dans un plan utile, situé à 700 millimètres du sol, tandis que la figure 24 représente ces niveaux d'éclairement au sol. Le plafond et le sol sont, dans cet exemple, distants de 2,4 mètres.

Dans le plan utile, la lumière est répartie de manière égale, c'est-à-dire de manière uniforme et homogène, dans de larges zones 167, sensiblement rectangulaires, chacune de ces zones 167 étant située à l'aplomb d'un module 165. Des zones restreintes 169 présentent une répartition uniforme et homogène de lumière, mais de valeur plus importante, chacune de ces zones restreintes 169 étant située entre deux zones 167 adjacentes. Ces zones 169 résultent de la superposition, et donc de l'addition en valeur, des flux lumineux de deux modules d'éclairage 165 adjacents. Sur cette figure 23, l'éclairage "superflu" est représenté par les zone 169 et la zone 171 qui borde et relie les différentes zones 169. Cet éclairage superflu est limité (près de 80% de la surface de la pièce présente un éclairage homogène et uniforme), et peut être encore réduit, en associant dans une même installation des modules d'éclairage 165 équipés de dispositifs d'éclairage de type 1a et des modules 135 équipés de dispositifs d'éclaire de type 1b, et en adaptant la distance séparant à chaque fois deux modules adjacents. Dans l'installation 163 de la figure 23, par exemple, l'augmentation des distances mutuelles entre les modules d'éclairage 165 réduirait encore l'éclairage superflu.

La figure 24 représente une installation d'éclairage 173 réalisées sous la forme d'une pluralité de modules d'éclairage 175, disposés alignées dans la longueur (axe X) d'une pièce rectangulaire 177. La pièce 177 peut être un couloir, en ce que sa longueur, de 6 mètres, est bien plus importante que sa largeur (axe Y), de 2 mètres. Les modules d'éclairage 175 sont disposés au plafond de la pièce 173, et sont équipés de dispositifs d'éclairage de type 1a.

La figure 25 représente les différents niveaux d'éclairement sur un plan utile, disposé à 700 millimètres du sol. De larges bandes 179, disposées dans la largueur de la pièce 177, présentent un éclairement uniforme et homogène, et couvrent l'essentiel (près de 90%) de la surface de cette pièce. Chacune des zones 179 est disposée à l'aplomb d'un module d'éclairage 175. Des zones de moindre luminosité 181 sont présentes en bordure de la pièce, de manière continue sur le bord correspondant à la largeur, et de manière plus ponctuelle entre deux bandes 179 adjacentes. L'homogénéité de l'éclairage dans la pièce 177 peut ici être encore amélioré, en supprimant les zones 181, en particulier en utilisant des modules d'éclairage 175 équipés de dispositifs d'éclairage de type 1c.

En fonction de la pièce à éclairer, et/ou d'exigences particulières d'éclairage, on peut combiner des modules présentant des dispositifs de type 1a, 1b et/ou 1c, par exemple de manière à couvrir au mieux l'ensemble de la superficie de la pièce.

Le cas échéant, un même module peut intégrer des dispositifs de type différents.

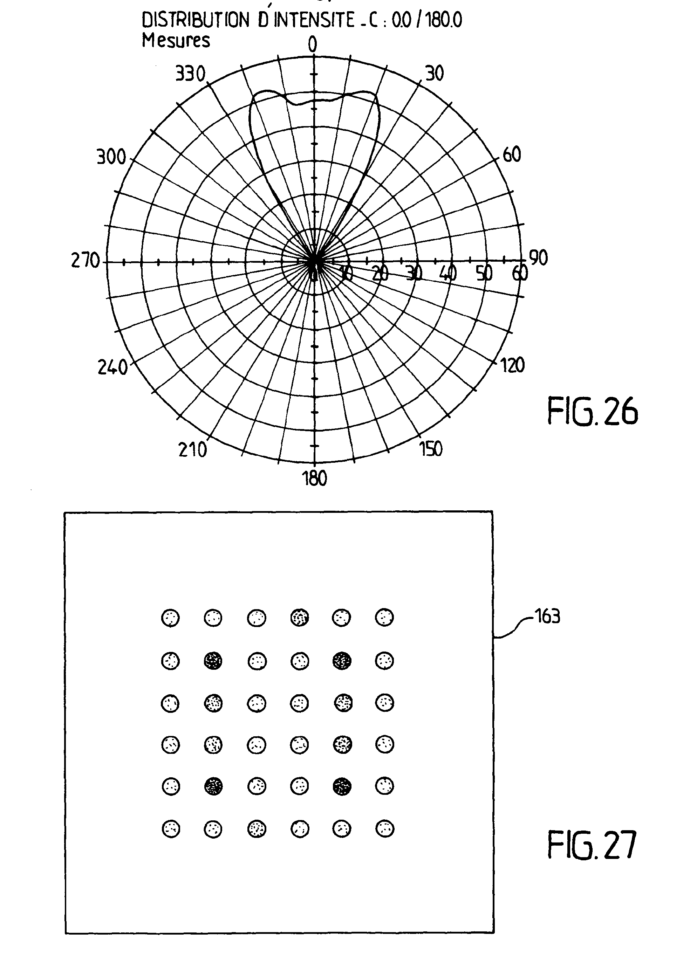

La figure 26 représente la répartition dans l'espace de l'intensité photométrique d'un module du type de la figure 20, incorporant des dispositifs d'éclairage de type 1a. On constate que cette distribution est très proche de la courbe théorique 25 de la figure 3.

La figure 27 représente un module d'éclairage 183, analogue au module d'éclairage 155 de la figure 21, dont les dispositifs d'éclairage sont munis de diodes électroluminescentes de couleurs différentes.

Ici, le module 183 comprend six dispositifs d'éclairage 185 équipés de diodes de couleur cyan, par exemple de type LXML-PE01-0070 BIN L5C, quatre dispositifs d'éclairage 187 équipés de diodes de couleur rouge, par exemple de type LXML-PD01-0040 BIN G4B, les dispositifs d'éclairage restants 189 étant équipés de diodes de couleur blanche, par exemple de type LXML-PWC1-0090 BIN MVND. Les différentes sources lumineuses des dispositifs d'éclairage intégrés à un module, de spectres de couleur différents, peuvent être choisies, en nombre et en caractéristique de couleur, de manière que le spectre du flux lumineux du module sur la surface éclairée 135 se rapproche de la lumière du jour. La couleur des objets éclairés par un tel module apparaît pratiquement identique à celle résultant d'un éclairage naturel.

La Demanderesse a remarqué que l'utilisation de diodes blanches uniquement avec les dispositifs de l'invention permet d'obtenir un indice de rendu des couleurs déjà amélioré, de l'ordre de 85 à 90, soit meilleur que les éclairages à tube fluorescent classiques notamment.

La figure 28 illustre le spectre du module de la figure 28. On constate que les longueurs d'onde comprises entre 440 nanomètres et 680 nanomètres sont représentées, et de manière sensiblement égale entre 440 nanomètres et 600 nanomètres.

À titre de complément, la figure 29 montre le guide de lumière 39b et la figure 30 le guide de lumière 39c, vus en perspective.

Les figures 31 et 32 montrent le support 47, vu en perspective.

Le support 47 présente une surface d'appui 191, située à la base du support 47, et destiné à être fixé, par exemple par collage, sur le substrat circuit imprimé. La surface d'appui 191 présente une découpe 193 aux dimensions extérieures de la diode électroluminescente 37, ici de forme rectangulaire. La découpe 193 permet un positionnement exact du support 47 par rapport à la diode, et par conséquent du guide de lumière 39.

Le support 47 présente une enveloppe extérieure 195, ici cylindrique, qui préserve la zone réfléchissante 75 du guide de lumière de la poussière.

Dans la partie haute, c'est-à-dire opposée à la surface d'appui 191, une surface cylindrique intérieure 197 est prévue qui forme une portée cylindrique parfaitement ajustée aux dimensions du guide de lumière 39, en particulier aux dimensions de la surface cylindrique 83. Le guide de lumière se trouve ainsi convenablement centré sur la diode électroluminescente 37.

Des échancrures 199 sont ménagées dans la face cylindrique intérieure 197. Les échancrures 199 sont adaptées pour recevoir un élément détrompeur, ou de positionnement, prévu sur le guide de lumière 39, par exemple faisant saillie de la surface cylindrique 83, tel que l'élément de positionnement 201 des figures 29 et 30.

Le support 47 comprend encore des éléments de maintien 203, faisant saillie de la surface intérieure 197, sur lesquels un guide de lumière 39, non représenté, peut venir en butée, en particulier par l'intermédiaire d'une face périphérique 70 entourant la face de sortie centrale 69 de ce guide de lumière.

L'invention peut être également vue comme un dispositif d'éclairage comprenant au moins une source lumineuse quasi-ponctuelle et un système de déviation de lumière montés ensemble pour produire une zone d'éclairement, les propriétés optiques du système de déviation étant choisies en fonction du diagramme d'éclairement de la source pour produire dans cette zone d'éclairement une lumière uniforme et homogène dans un plan perpendiculaire à l'axe d'éclairement.

Le guide de lumière 39 peut lui même être vu comme une invention.

L'invention n'est pas limitée aux modes de réalisation précédemment décrit.

L'utilisation d'une source lumineuse ponctuelle permet de réaliser un guidage très précis de la lumière émise par cette source. Elle permet, en particulier, une conception particulièrement étudiée du guide de lumière, ici pour obtenir un éclairement uniforme et homogène dans un plan utile.

En particulier, l'invention décrite met en oeuvre des diodes électroluminescentes en tant que sources ponctuelles de lumière. Pour les raisons évoquées plus haut, ces diodes sont considérées aujourd'hui comme les meilleurs dispositifs aujourd'hui capables d'être utilisés dans l'invention. Pour autant, toute source de lumière ponctuelle, y compris développée après le dépôt de la présente, pourrait être utilisée.

Les différentes réalisations du guide de lumière décrites ci-dessus produisent, sur le plan d'éclairement, ou plan utile, une zone d'éclairage centrale et une zone d'éclairage périphérique, contiguës. Il n'est pas exclu, dans certaines réalisations particulières au moins, que ces zones se superposent, au moins partiellement, pour autant qu'un éclairement uniforme et homogène est finalement obtenu sur la réunion de ces deux zones. Dans ce cas, l'éclairement fourni par le cône périphérique peut être utilisé pour apporter une quantité de lumière supplémentaire en périphérie de la zone d'éclairage centrale, par exemple si un déficit d'éclairement s'y produit.

Les configurations présentées de l'invention, en particulier les dimensions des éléments géométriques et leur forme précise, ont été déterminés pour obtenir un éclairement uniforme et homogène dans un plan utile choisi. En particulier, ce plan a été défini par sa distance au dispositif selon l'invention. En conséquence, les configurations présentées peuvent nécessiter certaines adaptations, de dimension ou de forme, pour obtenir un résultat similaire dans un plan utile différent, sans pour autant sortir du cadre de la présente invention.

Il a été décrit un dispositif d'éclairage comprenant au moins une source lumineuse quasi-ponctuelle et un système de déviation de lumière montés ensemble pour produire une zone d'éclairement, ledit système de déviation de lumière et la source lumineuse étant conjointement agencés de manière à produire dans cette zone d'éclairement une lumière uniforme et homogène dans un plan perpendiculaire à l'axe d'éclairement.

Il a également été également décrit que ce dispositif pouvait comprendre une ou plusieurs des caractéristiques optionnelles, complémentaires ou de substitution, suivantes

- Le système de déviation et la source lumineuse sont conjointement agencés de manière à produire une intensité lumineuse fonction de la position angulaire par rapport à la source lumineuse et sensiblement conforme à un diagramme prédéterminé.

- Le système de déviation de lumière est agencé de manière que ledit diagramme prédéterminé présente une valeur maximale pour une position angulaire extrême.

- Le système de déviation de lumière est agencé de manière que la position angulaire extrême soit sensiblement égale à une valeur choisie.

- Le système de déviation est agencé de manière que le diagramme d'intensité lumineuse présente une valeur minimale dans l'axe d'éclairement.

- Le système de déviation est agencé de manière que le ledit diagramme prédéterminé présente un rapport de intensité lumineuse maximale sur l'intensité lumineuse minimale choisi.

- Le rapport de l'intensité lumineuse maximale sur l'intensité lumineuse minimale est choisi voisin de 1,4.

- Ledit diagramme prédéterminé suit une fonction trigonométrique de la position angulaire.

- Ledit diagramme suit une fonction inverse du cosinus de la position angulaire, acceptant une puissance dudit cosinus en tant que paramètre.

- La zone d'éclairement présente un contour sensiblement circulaire.

- Le système de déviation de lumière comprend un premier élément optique agencé de manière à séparer le flux lumineux émis par la source lumineuse quasi-ponctuelle en au moins un cône lumineux central et un cône lumineux périphérique.

- Le système de déviation de lumière comprend un second élément optique, disposé sur le trajet du cône lumineux central, et conformé de manière à éclairer une première portion de la zone éclairée choisie.

- Ladite première portion présente un contour généralement circulaire.

- Le second élément optique est agencé de manière à produire une valeur d'éclairement sensiblement constante sur ladite première portion.

- Le second élément optique est réalisé sous la forme d'une portion de lentille, de forme au moins partiellement hyperbolique.

- Le système de déviation de lumière comprend un troisième élément optique, disposé sur le trajet du cône lumineux périphérique, et conformé de manière à éclairer une seconde portion de la zone éclairée choisie, ladite seconde portion étant contiguë à la première portion et complémentaire de celle-ci.

- Ladite seconde portion présente une allure générale de couronne circulaire.

- Le troisième élément optique est agencé de manière produire une valeur d'éclairement sensiblement constante sur ladite seconde portion.

- Le troisième élément optique est réalisé sous la forme d'une portion de réflecteur.

- Le troisième élément optique est agencé sous la forme d'une portion tronconique, dont la génératrice est déterminée de manière à produire une valeur d'éclairement sensiblement constante sur ladite seconde portion.

- Le premier élément optique est agencé de manière que la valeur de l'éclairement en chacun des points de ladite première portion soit sensiblement identique à la valeur de l'éclairement en chacun des points de ladite seconde portion.

- La source lumineuse comprend au moins une diode électroluminescente.

- Les premier, second, et troisième éléments optiques sont réalisés sous la forme d'une pièce optique monobloc.

- Le premier élément optique est réalisé sous la forme d'un dièdre.

- Ladite portion de lentille présente une surface au moins partiellement concave, de courbure dirigée vers la source lumineuse. Plus généralement, cette portion de lentille peut être réalisée sous la forme d'une courbe de type conique, en particulier une hyperbole, dont la partie concave est tournée vers ladite source lumineuse.

- Le système de déviation de lumière comprend une face de sortie dépolie.

- Le module d'éclairage comprend une pluralité de dispositifs d'éclairage

- Dans le module d'éclairage, les dispositifs d'éclairage sont agencés à une distance mutuelle faible au regard de la distance séparant chacune de ces dispositifs d'éclairage à la zone d'éclairement.

- Dans le module d'éclairage, la couleur de chacune des sources lumineuses quasi-ponctuelles des dispositifs d'éclairage est déterminée de manière à produire conjointement une lumière de spectre choisi.

**Revendications**

1. Dispositif d'éclairage (1, 1a, 1b, 1c), notamment pour éclairer un espace intérieur comme une pièce, comprenant au moins une source lumineuse quasi-ponctuelle du genre diode électroluminescente (37) et un système de déviation de lumière placé en position prédéterminée par rapport à la source lumineuse pour guider la lumière émise par celle-ci sur une zone d'éclairement (3), **caractérisé en ce que** le système de déviation de lumière comprend une pièce optique monobloc (39, 39a, 39b, 39c) recevant dans l'axe central un faisceau de lumière incident issu de la diode électroluminescente (37), la pièce optique monobloc (39, 39a, 39b, 39c) comprenant un premier élément optique (51) agencé de manière à séparer le faisceau de lumière incident en au moins un cône lumineux central (55) et un cône lumineux périphérique (57), un second élément optique (65) disposé sur le trajet du cône lumineux central (55), un troisième élément optique (71) disposé sur le trajet du cône lumineux périphérique (57), et **en ce que** cette pièce optique présente une surface de sortie (69) adaptée pour opérer une réfraction du flux lumineux central et une réfraction du flux lumineux périphérique, le troisième élément optique et la surface de sortie étant agencés pour faire converger le flux lumineux périphérique en direction de l'axe du flux lumineux central de sorte qu'un croisement des flux lumineux résultants a lieu dans la zone d'éclairement, en amont d'un plan perpendiculaire (7) à l'axe d'éclairement (5) dans lequel ces flux lumineux produisent deux parties (67 ;73) complémentaires et contiguës d'une surface éclairée (9), sur l'ensemble desquelles un éclairement sensiblement constant est obtenu.

2. Dispositif selon la revendication 1, dans lequel la pièce optique monobloc (39, 39a, 39b, 39c) et la diode électroluminescente (37) sont conjointement agencées de manière à produire une intensité lumineuse fonction de la position angulaire par rapport à la diode électroluminescente (37) et sensiblement conforme à un diagramme prédéterminé, la pièce optique étant agencée de manière que ledit diagramme prédéterminé présente une valeur d'intensité maximale choisie en une position angulaire extrême, et une valeur d'intensité minimale choisie dans l'axe d'éclairement (5).

3. Dispositif selon la revendication 2, dans lequel la pièce optique monobloc (39, 39a, 39b, 39c) est agencée de manière que le ledit diagramme prédéterminé présente un rapport de l'intensité lumineuse maximale sur l'intensité lumineuse minimale choisi, de préférence voisin de 1,4.

4. Dispositif selon l'une des revendications 2 et 3, dans lequel la pièce optique monobloc (39, 39a, 39b, 39c) est agencée de manière que ledit diagramme prédéterminé suive une fonction inverse du cube du cosinus de la position angulaire.

**5.** Dispositif selon l'une des revendications précédentes, dans lequel le second élément optique (65) est conformé de manière à produire une valeur d'éclairement sensiblement constante sur une première partie (67) de la surface éclairée (9).

**6.** Dispositif selon l'une des revendications précédentes, dans lequel le second élément optique (65) est réalisé sous la forme d'une portion de lentille (69, 69b, 69c), de forme au moins partiellement en courbe de type conique, dont la partie concave est dirigée vers la diode électroluminescente (37).

**7.** Dispositif selon l'une des revendications précédentes, dans lequel le troisième élément optique (71) est conformé de manière à produire une valeur d'éclairement sensiblement constante sur une seconde partie (73) de la surface éclairée (9), ladite seconde partie (73) étant contiguë à la première portion (67) et complémentaire de celle-ci.

**8.** Dispositif selon l'une des revendications précédentes, dans lequel le troisième élément optique (71) est réalisé sous la forme d'une portion de réflecteur tronconique (75, 75b, 75c), dont la génératrice (76, 76b, 76c) est déterminée de manière à produire une valeur d'éclairement sensiblement constante sur ladite seconde partie (73).

**9.** Dispositif selon l'une des revendications 5 à 8 prise en combinaison avec la revendication 7, dans lequel le premier élément optique (51) est agencé de manière que la valeur de l'éclairement en ladite première partie (67) soit sensiblement identique à la valeur de l'éclairement en ladite seconde partie (73).

**10.** Dispositif selon l'une des revendications précédentes, dans lequel le premier élément optique (51) est réalisé sous la forme d'un dièdre.

**11.** Dispositif selon l'une des revendications précédentes, dans lequel la surface de sortie (69) est au moins partiellement dépolie.

**12.** Module d'éclairage (133, 151, 155, 163) comprenant une pluralité de dispositifs d'éclairage (1, 141, 157) selon l'une des revendications précédentes.

**13.** Module d'éclairage selon la revendication 12, dans lequel les dispositifs d'éclairage (1, 141, 157) sont agencés à une distance mutuelle faible au regard de la distance séparant chacune de ces dispositifs d'éclairage à la zone d'éclairement (9).

**14.** Module d'éclairage selon l'une des revendications 12 et 13, dans lequel la couleur de chacune des diodes électroluminescentes des dispositifs d'éclairage (1, 141, 157) est déterminée de manière à produire conjointement une lumière de spectre choisi.

**Patentansprüche**

**1.** Beleuchtungsvorrichtung (1, 1a, 1b, 1c), insbesondere zum Beleuchten eines Innenraums wie etwa eines Zimmers, mindestens eine quasi-punktförmige Lichtquelle der Art einer Licht emittierenden Diode (37) und ein Lichtablenkungssystem umfassend, das in Bezug auf die Lichtquelle an einer vorbestimmten Position angeordnet ist, um das von dieser emittierte Licht auf einen Beleuchtungsbereich (3) zu lenken, **dadurch gekennzeichnet, dass** das Lichtablenkungssystem ein einteiliges optisches Bauteil (39, 39a, 39b, 39c) aufweist, das in der Mittelachse einen von der Licht emittierenden Diode (37) abgegebenen, einfallenden Lichtstrahl aufnimmt, wobei das einteilige optische Bauteil (39, 39a, 39b, 39c) ein erstes optisches Element (51), das dazu eingerichtet ist, den einfallenden Lichtstrahl in mindestens einen zentralen Lichtkegel (55) und einen peripheren Lichtkegel (57) aufzuteilen, ein zweites optisches Element (65), das auf der Bahn des zentralen Lichtkegels (55) angeordnet ist, ein drittes optisches Element (71) aufweist, das auf der Bahn des peripheren Lichtkegels (57) angeordnet ist, und dass dieses optische Bauteil eine Austrittsfläche (69) aufweist, die dazu angepasst ist, eine Brechung des zentralen Lichtflusses und eine Brechung des peripheren Lichtflusses zu bewirken, wobei das dritte optische Element und die Austrittsfläche dazu eingerichtet sind, den peripheren Lichtfluss in Richtung der Achse des zentralen Lichtflusses so konvergieren zu lassen, dass eine Kreuzung der sich ergebenden Lichtflüsse im Beleuchtungsbereich vor einer zur Beleuchtungsachse (5) senkrechten Ebene (7) stattfindet, in der diese Lichtflüsse zwei komplementäre und zusammenhängende Teile (67; 73) einer Beleuchtungsfläche (9) erzeugen, über deren Gesamtheit eine im Wesentlichen konstante Beleuchtung erhalten wird.

**2.** Vorrichtung nach Anspruch 1, wobei das einteilige optische Bauteil (39, 39a, 39b, 39c) und die Licht emittierende Diode (37) gemeinsam so eingerichtet sind, dass eine Lichtstärke erzeugt wird, die von der Winkelposition in Bezug auf die Licht emittierende Diode (37) abhängt und im Wesentlichen einem vorbestimmten Kurvenbild entspricht, wobei das optische Bauteil so eingerichtet ist, dass das vorbestimmte Kurvenbild einen Wert maximaler Stärke, der an einer äußersten Winkelposition gewählt ist, und einen Wert minimaler Stärke aufweist, der in der Beleuchtungsachse (5) gewählt ist.

**3.** Vorrichtung nach Anspruch 2, wobei das einteilige optische Bauteil (39, 39a, 39b, 39c) so eingerichtet ist, dass das vorbestimmte Kurvenbild ein ausgewähltes Verhältnis der maximalen Lichtstärke zur minimalen Lichtstärke von vorzugsweise um die 1,4 aufweist.

**4.** Vorrichtung nach einem der Ansprüche 2 und 3, wobei das einteilige optische Bauteil (39, 39a, 39b, 39c) so eingerichtet ist, dass das vorbestimmte Kurvenbild einer inversen Kubikfunktion des Cosinus der Winkelposition folgt.

**5.** Vorrichtung nach einem der vorhergehenden Ansprüche, wobei das zweite optische Element (65) so geformt ist, dass ein im Wesentlichen konstanter Beleuchtungswert über einen ersten Teil (67) der Beleuchtungsfläche (9) erzeugt wird.

**6.** Vorrichtung nach einem der vorhergehenden Ansprüche, wobei das zweite optische Element (65) in Form eines Linsenabschnitts (69, 69b, 69c) mit zumindest teilweise konisch gekrümmter Form hergestellt ist, dessen konkaver Teil zur Licht emittierenden Diode (37) hin gerichtet ist.

**7.** Vorrichtung nach einem der vorhergehenden Ansprüche, wobei das dritte optische Element (71) so geformt ist, dass ein im Wesentlichen konstanter Beleuchtungswert über einen zweiten Teil (73) der Beleuchtungsfläche (9) erzeugt wird, wobei der zweite Teil (73) mit dem ersten Teil (67) zusammenhängt und komplementär zu diesem ist.

**8.** Vorrichtung nach einem der vorhergehenden Ansprüche, wobei das dritte optische Element (71) in Form eines kegelstumpfförmigen Reflektorabschnitts (75, 75b, 75c) hergestellt ist, dessen Mantellinie (76, 76b, 76c) so bestimmt ist, dass ein im Wesentlichen konstanter Beleuchtungswert über den zweiten Teil (73) erzeugt wird.

**9.** Vorrichtung nach einem der Ansprüche 5 bis 8, in Kombination mit Anspruch 7, wobei das erste optische Element (51) so eingerichtet ist, dass der Beleuchtungswert im ersten Teil (67) im Wesentlichen identisch zum Beleuchtungswert im zweiten Teil (73) ist.

**10.** Vorrichtung nach einem der vorhergehenden Ansprüche, wobei das erste optische Element (51) in Form eines Dieders hergestellt ist.

**11.** Vorrichtung nach einem der vorhergehenden Ansprüche, wobei die Austrittsfläche (69) zumindest teilweise matt ist.

**12.** Beleuchtungsmodul (133, 151, 155, 163), mehrere Beleuchtungsvorrichtungen (1, 141, 157) nach einem der vorhergehenden Ansprüche umfassend.

**13.** Beleuchtungsmodul nach Anspruch 12, wobei die Beleuchtungsvorrichtungen (1, 141, 157) hinsichtlich des Abstands, der jeweils diese Beleuchtungsvorrichtungen vom Beleuchtungsbereich (9) trennt, in einem geringen gegenseitigen Abstand angeordnet sind.

**14.** Beleuchtungsmodul nach einem der Ansprüche 12 und 13, wobei die Farbe jeder der Licht emittierenden Dioden der Beleuchtungsvorrichtungen (1, 141, 157) so bestimmt ist, dass gemeinsam ein Licht mit ausgewähltem Spektrum erzeugt wird.

**Claims**

**1.** Lighting device (1, 1 a, 1 b, 1 c), especially for lighting an inside space such as a room, comprising at least one quasi-point light source of the light emitting diode (37) type and a light deflection system placed in a predetermined position relative to the light source for guiding the light emitted thereby to a lighting zone (3), **characterised in that** the light deflection system comprises a one-piece optical component (39, 39a, 39b, 39c) which receives in the central axis an incident light beam emanating from the light emitting diode (37), the one-piece optical component (39, 39a, 39b, 39c) comprising a first optical element (51) which is arranged so as to separate the incident light beam into at least one central light cone (55) and a peripheral light cone (57), a second optical element (65) which is arranged on the path of the central light cone (55), a third optical element (71) which is arranged on the path of the peripheral light cone (57), and **in that** the optical component has an outlet surface (69) which is adapted to effect a refraction of the central light flux and a refraction of the peripheral light flux, the third optical element and the outlet surface being arranged to make the peripheral light flux converge in the direction of the axis of the central light flux so that crossing of the resulting light fluxes takes place in the lighting zone, upstream of a plane (7) perpendicular to the lighting axis (5) in which the light fluxes produce two complementary and contiguous portions (67; 73) of a lit surface (9), over the totality of which substantially constant lighting is obtained.

2. Device according to claim 1, wherein the one-piece optical component (39, 39a, 39b, 39c) and the light emitting diode (37) are jointly arranged so as to produce a light intensity which is a function of the angular position relative to the light emitting diode (37) and substantially in conformity with a predetermined diagram, the optical component being arranged in such a manner that said predetermined diagram has a chosen maximum intensity value at an extreme angular position and a chosen minimum intensity value in the lighting axis (5).

3. Device according to claim 2, wherein the one-piece optical component (39, 39a, 39b, 39c) is arranged in such a manner that said predetermined diagram has a chosen ratio of the maximum light intensity to the minimum light intensity, preferably close to 1.4.

4. Device according to either claim 2 or claim 3, wherein the one-piece optical component (39, 39a, 39b, 39c) is arranged in such a manner that said predetermined diagram follows an inverse function of the cube of the cosine of the angular position.

5. Device according to any one of the preceding claims, wherein the second optical element (65) is configured to produce a substantially constant lighting value on a first portion (67) of the lit surface (9).

6. Device according to any one of the preceding claims, wherein the second optical element (65) is in the form of a lens portion (69, 69b, 69c) of a form which at least in part is a conical type curve, the concave portion of which is directed towards the light emitting diode (37).

7. Device according to any one of the preceding claims, wherein the third optical element (71) is configured so as to produce a substantially constant lighting value on a second portion (73) of the lit surface (9), said second portion (73) being contiguous to the first portion (67) and complementary thereto.

8. Device according to any one of the preceding claims, wherein the third optical element (71) is in the form of a portion of a tapered reflector (75, 75b, 75c), the generating line (76, 76b, 76c) of which is determined so as to produce a substantially constant lighting value on said second part (73).

9. Device according to any one of claims 5 to 8 in combination with claim 7, wherein the first optical element (51) is arranged so that the value of the lighting in said first portion (67) is substantially identical to the value of the lighting in said second portion (73).

10. Device according to any one of the preceding claims, wherein the first optical element (51) is in the form of a dihedron.

11. Device according to any one of the preceding claims, wherein the outlet surface (69) is at least partially frosted.

12. Lighting module (133, 151, 155, 163) comprising a plurality of lighting devices (1, 141, 157) according to any one of the preceding claims.

13. Lighting module according to claim 12, wherein the lighting devices (1, 141, 157) are arranged at a mutual distance which is small in relation to the distance separating each of the lighting devices from the lighting zone (9).

14. Lighting module according to either claim 12 or claim 13, wherein the colour of each of the light emitting diodes of the lighting devices (1, 141, 157) is determined so that they together produce a light of chosen spectrum.

FIG.1

FIG.2

FIG.3

FIG.4

FIG.5

EP 2 060 849 B1

FIG.6

EP 2 060 849 B1

FIG.7

FIG. 8

FIG. 9

FIG.10

FIG.11

EP 2 060 849 B1

FIG.12

FIG.13

FIG.14

FIG.15

FIG.16

FIG.17

FIG.18

FIG.19

RS — 149

CNV — 147

145 · 143

PLT

153

141  141  141  137  151

FIG. 20

159

155

157

D157

161

FIG. 21

FIG.22

FIG.23

FIG. 24

FIG. 25

DISTRIBUTION D'INTENSITE _C : 0.0 / 180.0
Mesures

FIG.26

FIG.27

## Spectre

APRES : LEDs bleus. tri optimal

FIG. 28

FIG. 29

FIG.30

FIG.31

FIG.32